# EUROPEAN PATENT APPLICATION

(11) **EP 4 650 921 A1**
(43) Date of publication of application: **19.11.2025**
(21) Application number: 23952543.9
(22) Date of filing: 19.09.2023
(51) Int. Cl.: G06F 3/048

(54) **DISPLAY METHOD AND ELECTRONIC DEVICE**

(71) Applicant: Honor Device Co., Ltd., Shenzhen, Guangdong 518040 (CN)
(72) Inventor: WANG, Huanfu, Shenzhen, Guangdong 518040 (CN)
(74) Representative: Gill Jennings & Every LLP
(86) International application number: PCT/CN2023/119865
(87) International publication number: WO 2025/059881

(57) **Abstract**

A display method and an electronic device are provided and relate to the field of terminal technologies. When an outward foldable screen is in a folded state, it may be ensured that displaying of information on one screen formed by folding does not affect displaying of information on another screen. The method includes: displaying a home screen on a first screen, where the home screen includes a first icon and a second icon of a first application; displaying a first window on the home screen based on a tap operation on the first icon, where the first window includes a first interface of the first application; displaying the first icon on the home screen based on a minimization operation on the first window; displaying the first window on the home screen based on a first operation on the second icon, where the first window includes a first two-dimensional code of the first application; displaying the first icon on the home screen based on the minimization operation on the first window, where in the foregoing process, a second screen is black; and displaying the first two-dimensional code on the second screen based on a second operation, where the home screen does not include the first window, and the home screen includes the first icon.

## Description

### TECHNICAL FIELD

This application relates to the field of terminal technologies, and in particular, to a display method and an electronic device.

### BACKGROUND

Electronic devices with flexible foldable screens are widely welcomed by users due to their large screen and convenience features. The flexible foldable screen is foldable to form at least two screens. For example, the flexible foldable screen may be folded along a folding edge or a hinge to form a first screen and a second screen.

A flexible foldable screen may be folded outward (which is referred to as an outward foldable screen for short). After the outward foldable screen is folded, a display direction of a first screen and a display direction of a second screen are opposite to each other, and the display direction is a direction of a front surface of the screen. In other words, after the outward foldable screen is folded, both the first screen and the second screen are visible to the user.

However, in a conventional technology, for an electronic device with an outward foldable screen, after the outward foldable screen is folded, a first screen and a second screen are not fully used, and usually only one of the screens (for example, the first screen or the second screen) is used for displaying.

### SUMMARY

In view of this, this application provides a display method and an electronic device. After an outward foldable screen is folded, corresponding information may be separately displayed on a first screen and a second screen, and it is ensured that information displayed on one screen does not affect information displayed on another screen.

According to a first aspect, this application provides a display method, applied to an electronic device. The electronic device includes a display, the display includes a first screen and a second screen, a display direction of the first screen and a display direction of the second screen are opposite to each other when the display is in a folded state, and the first screen and the second screen are two different display areas of the display screen. That is, the method is used for an electronic device with an outward foldable screen. When the electronic device is in the folded state, the method includes the following steps.

A home screen is displayed on the first screen at a first time point, where the home screen includes a first icon and a second icon (which are also referred to as application icons) of a first application (which is also referred to as a target application), the first icon is in a form of a floating icon, and the second icon is in a form of a desktop icon. A first window is displayed on the home screen at a second time point in response to a tap operation on the first icon, where the first window is a non-full-screen window, the home screen does not include the second icon, and the first window includes a first interface of the first application at the second time point. The first interface is an application interface of the first application displayed in the first window before the first application is minimized to the first icon. In other words, after the second icon is expanded, the non-full-screen first window may be formed.

The first icon is displayed on the home screen and the first window is not displayed in response to a minimization operation on the first window. The first window is displayed on the home screen at a third time point in response to a first operation on the second icon, where the first window includes a first two-dimensional code of the first application at the third time point. In other words, in a case that the first icon and the second icon are displayed on the home screen, in response to an operation of requesting to display the two-dimensional code by using the second icon, the electronic device may reuse the first window after the first icon is expanded to display the two-dimensional code.

The first icon is displayed on the home screen and the first window is not displayed at a fourth time point in response to the minimization operation on the first window, where the second screen is black from the first time point to the fourth time point. The first two-dimensional code is displayed on the second screen in response to a second operation, where the home screen does not include the first window, and the home screen includes the first icon. In other words, in a case that the first icon and the second icon are displayed on the home screen, in response to an operation of requesting to display the two-dimensional code on the second screen, the electronic device does not reuse the first window after the first icon is expanded, but separately displays the two-dimensional code on the second screen.

In conclusion, according to the solution of this application, in a case that when the display is in a folded state, the home screen is displayed on the first screen, and the home screen includes the floating icon (namely, the first icon) and the desktop icon (namely, the second icon) of the first application, in response to the first operation on the desktop icon (for example, an operation of selecting a two-dimensional code option after touching and holding the desktop icon), the electronic device may reuse the first window after the floating icon is expanded, and display the first two-dimensional code of the first application in the first window. Similarly, in a case that the home screen is displayed on the first screen, and the home screen includes the floating icon and the desktop icon of the first application, in response to the second operation (for example, an operation of double-tapping the second screen), the electronic device does not reuse the first window after the floating icon on the home screen is expanded, but separately displays the first two-dimensional code on the second screen, so that normal use of the first screen cannot be affected.

In a possible design manner of the first aspect, that the first window is displayed on the home screen at a third time point in response to a first operation on the second icon includes: An option list of the first application is displayed in response to a touch and hold operation on the second icon, where the option list includes a first option corresponding to the first two-dimensional code; and the first window is displayed on the home screen in response to a selection operation on the first option at the third time point.

In other words, the first operation may include the touch and hold operation on the second icon, and the first operation also includes the selection operation on the first option corresponding to the first two-dimensional code. In this way, in response to an operation of triggering displaying of the first two-dimensional code by using the first option, the electronic device may display the first two-dimensional code by using the first window after the first icon is expanded.

In a possible design manner of the first aspect, the second operation is the operation of double-tapping the second screen. Certainly, the second operation may alternatively be another operation, for example, an operation of double-tapping the second screen when touching and holding a power button, an operation of triple-tapping the second screen, and the like.

In a possible design manner of the first aspect, that the first window is displayed on the home screen at a third time point, where the first window includes a first two-dimensional code of the first application at the third time point includes:

The first window is displayed on the home screen at the third time point in response to a case that a category name of a first activity is the same as a category name of a second activity and a display associated with the first activity is the same as a display associated with the second activity, where the first window includes the first two-dimensional code of the first application at the third time point; and the first activity is an activity corresponding to the first icon, and the second activity is an activity corresponding to the first two-dimensional code displayed in the first window.

If the category name of the first activity is the same as the category name of the second activity, it indicates that the first activity is a reusable activity (activity). In addition, if the display associated with the first activity is the same as the display associated with the second activity (and both are first screens), it indicates that both the first activity and the second activity are used to display information on a same screen. That the displays are the same may mean that IDs of the displays are the same, and the IDs of the displays include an ID of the first screen, for example, DEFAULT_DISPLAY, and an ID of the second screen, for example, SUB_BUILTIN_DISPLAY.

In this case, the electronic device may reuse a task (task) of the first activity, to display the first two-dimensional code in the first window.

In a possible design manner of the first aspect, that the first two-dimensional code is displayed on the second screen includes: The first two-dimensional code is displayed on the second screen in response to a case that the category name of the first activity is the same as a category name of a third activity but the display associated with the first activity is different from a display associated with the third activity, where the third activity is the activity corresponding to the first two-dimensional code displayed on the second screen.

If the category name of the first activity is the same as the category name of the third activity, it indicates that the first activity is a reusable activity. In addition, if the display (the first screen) associated with the first activity is different from the display (the second screen) associated with the third activity, it indicates that the first activity and the third activity are respectively used to display information on different screens. In this case, the electronic device does not reuse the task of the first activity, but uses a new task to display the first two-dimensional code on the second screen. In this way, it can be avoided that the first window on the first screen is expanded due to reuse, for example, the abnormal case 2 described below.

In a possible design manner of the first aspect, after that the first two-dimensional code is displayed on the second screen in response to a second operation, the method further includes: The first icon is not displayed on the home screen but the first two-dimensional code is displayed on the second screen after a third operation, where the third operation may be an operation of dragging the first icon to the top or bottom of the first screen, or the third operation may be a tap operation on the first icon and a close operation on the expanded first window; and a main interface of the first application is displayed on the first screen and the first two-dimensional code is displayed on the second screen in response to a tap operation on the second icon.

In other words, in a case that the second icon is displayed on the first screen and the first two-dimensional code is displayed on the second screen, in response to the tap operation of the user on the second icon, the electronic device does not reuse the task of displaying the first two-dimensional code on the second screen, but separately starts the first application on the first screen and displays the main interface of the first application. In this way, it can be avoided that the first two-dimensional code on the second screen is moved to the first screen due to reuse, causing the first two-dimensional code on the second screen to disappear.

In a possible design manner of the first aspect, that a main interface of the first application is displayed on the first screen includes: The main interface of the first application is displayed on the first screen in response to a case that the category name of the third activity is the same as a category name of a fourth activity but the display associated with the third activity is different from a display associated with the fourth activity, where the third activity is the activity corresponding to the first two-dimensional code displayed on the second screen, and the fourth activity is an activity corresponding to the main interface displayed on the first screen.

If the category name of the third activity is the same as the category name of the fourth activity, it indicates that the third activity is a reusable activity. In addition, if the display (the second screen) associated with the third activity is different from the display (the first screen) associated with the fourth activity, it indicates that the third activity and the fourth activity are respectively used to display information on different screens. In this case, the electronic device does not reuse the task of the third activity, but uses a new task to display the first two-dimensional code on the first screen. In this way, it can be avoided that the first two-dimensional code on the second screen disappears due to reuse, for example, avoid the abnormal case 1 described below.

In a possible design manner of the first aspect, that the first window is displayed on the home screen in response to a first operation on the second icon includes: A task of running the first activity is reused to display the first window on the home screen, in response to the first operation on the second icon and after determining that a caller is an application on the first screen and the first activity is associated with the first screen, where the first activity is the activity corresponding to the first icon.

If the caller is the application on the first screen, and the first activity is associated with the first screen, it does not belong to a case that the first screen reuses the activity on the second screen, nor does it belong to a case that the second screen reuses the acticity on the first screen, that is, a first condition is not satisfied. Therefore, the electronic device can reuse the task of the first activity. In other words, a task of finally displaying the first two-dimensional code in the first window and the task of the first activity are a same task, for example, IDs of the two tasks are the same.

In a possible design manner of the first aspect, that the first two-dimensional code is displayed on the second screen in response to a second operation includes: A new task is created and the first two-dimensional code is displayed on the second screen in response to the first operation and after determining that the caller is a first service (a service on the second screen, for example, a back screen service below) and a form of a window of the first activity is a non-full-screen form.

If the caller is the first service and the form of the window of the first activity is the non-full-screen form, the second screen reuses the acticity on the first screen, that is, the first condition is satisfied. Therefore, the electronic device cannot reuse the task of the first activity, but needs to create the new task. In other words, a task of finally displaying the first two-dimensional code on the second screen and the task of the first activity are different tasks, for example, IDs of the two tasks are different.

In a possible design manner of the first aspect, that a main interface of the first application is displayed on the first screen in response to a tap operation on the second icon includes: A new task is created and the main interface of the first application is displayed on the first screen in response to the tap operation on the second icon and after determining that a caller is an application on the first screen and the fourth activity is associated with the second screen, where the third activity is the activity corresponding to the first two-dimensional code displayed on the second screen.

If the caller is the application on the first screen, and the fourth activity is associated with the second screen, the first screen reuses the acticity on the second screen, that is, the first condition is satisfied. Therefore, the electronic device cannot reuse the task of the third activity, but needs to create the new task. In other words, a task of finally displaying the main interface on the first screen and the task of the third activity are different tasks, for example, IDs of the two tasks are different.

According to a second aspect, this application further provides an electronic device. The electronic device includes a display, a memory, and one or more processors. The display, the memory, and the processor are coupled. The display includes a first screen and a second screen, a display direction of the first screen and a display direction of the second screen are opposite to each other when the display is in a folded state, and the first screen and the second screen are two different display areas of the display screen. The memory is configured to store computer program code. The computer program code includes computer instructions. When the electronic device is in a folded state, and the computer instructions are executed by the processor, the electronic device is enabled to perform the following steps:

A home screen is displayed on the first screen at a first time point, where the home screen includes a first icon and a second icon of a first application, and the first icon is displayed in a form of a floating icon; a first window is displayed on the home screen at a second time point based on a tap operation on the first icon, where the first window is a non-full-screen window, the home screen does not include the second icon, and the first window includes a first interface of the first application at the second time point; the first icon is displayed on the home screen and the first window is not displayed based on a minimization operation on the first window; the first window is displayed on the home screen at a third time point based on a first operation on the second icon, where the first window includes a first two-dimensional code of the first application at the third time point; the first icon is displayed on the home screen and the first window is not displayed at a fourth time point based on the minimization operation on the first window, where the second screen is black from the first time point to the fourth time point; and the first two-dimensional code is displayed on the second screen based on a second operation, where the home screen does not include the first window, and the home screen includes the first icon.

In a possible design manner of the first aspect, when the computer instructions are executed by the processor, the electronic device is further enabled to perform the following steps: An option list of the first application is displayed based on a touch and hold operation on the second icon, where the option list includes a first option corresponding to the first two-dimensional code; and the first window is displayed on the home screen based on a selection operation on the first option at the third time point.

In a possible design manner of the second aspect, the second operation is the operation of double-tapping the second screen.

In a possible design manner of the second aspect, when the computer instructions are executed by the processor, the electronic device is further enabled to perform the following steps: The first window is displayed on the home screen at the third time point based on a case that a category name of a first activity is the same as a category name of a second activity and a display associated with the first activity is the same as a display associated with the second activity, where the first window includes the first two-dimensional code of the first application at the third time point; and the first activity is an activity corresponding to the first icon, and the second activity is an activity corresponding to the first two-dimensional code displayed in the first window.

In a possible design manner of the second aspect, when the computer instructions are executed by the processor, the electronic device is further enabled to perform the following steps: The first two-dimensional code is displayed on the second screen based on a case that the category name of the first activity is the same as a category name of a third activity but the display associated with the first activity is different from a display associated with the third activity, where the third activity is the activity corresponding to the first two-dimensional code displayed on the second screen.

In a possible design manner of the second aspect, when the computer instructions are executed by the processor, the electronic device is further enabled to perform the following steps: The first icon is not displayed on the home screen but the first two-dimensional code is displayed on the second screen after a third operation, where a main interface of the first application is displayed on the first screen and the first two-dimensional code is displayed on the second screen based on a tap operation on the second icon.

In a possible design manner of the second aspect, when the computer instructions are executed by the processor, the electronic device is further enabled to perform the following steps: The main interface of the first application is displayed on the first screen based on a case that the category name of the third activity is the same as a category name of a fourth activity but the display associated with the third activity is different from a display associated with the fourth activity, where the third activity is the activity corresponding to the first two-dimensional code displayed on the second screen, and the fourth activity is an activity corresponding to the main interface displayed on the first screen.

In a possible design manner of the second aspect, when the computer instructions are executed by the processor, the electronic device is further enabled to perform the following steps: A task of running the first activity is reused to display the first window on the home screen, based on the first operation on the second icon and after determining that a caller is an application on the first screen and the first activity is associated with the first screen, where the first activity is the activity corresponding to the first icon.

In a possible design manner of the second aspect, when the computer instructions are executed by the processor, the electronic device is further enabled to perform the following steps: A new task is created and the first two-dimensional code is displayed on the second screen based on the first operation and after determining that the caller is a first service and a form of a window of the first activity is a non-full-screen form.

In a possible design manner of the second aspect, when the computer instructions are executed by the processor, the electronic device is further enabled to perform the following steps: A new task is created and the main interface of the first application is displayed on the first screen based on the tap operation on the second icon and after determining that a caller is an application on the first screen and the fourth activity is associated with the second screen, where the third activity is the activity corresponding to the first two-dimensional code displayed on the second screen.

According to a third aspect, this application provides a chip system. The chip system is applied to an electronic device including a display and a memory. The chip system includes one or more interface circuits and one or more processors. The interface circuit is interconnected to the processor through a line. The interface circuit is configured to: receive a signal from the memory of the electronic device and send a signal to the processor. The signal includes computer instructions stored in the memory. When the processor executes the computer instructions, the electronic device performs the method according to any one of the first aspect and the possible design manners of the first aspect.

According to a fourth aspect, this application provides a computer storage medium. The computer storage medium includes computer instructions. When the computer instructions are run on an electronic device, the electronic device is enabled to perform the method according to any one of the first aspect and the possible design manners of the first aspect.

According to a fifth aspect, this application provides a computer program product. When the computer program product is run on a computer, the computer is enabled to perform the method according to any one of the first aspect and the possible design manners of the first aspect.

It should be understood that for beneficial effects that can be achieved by the electronic device provided in the second aspect, the chip system in the third aspect, the computer storage medium in the fourth aspect, and the computer program product in the fifth aspect, refer to the beneficial effects according to any one of the first aspect and the possible design manners of the first aspect. Details are not described herein again.

### BRIEF DESCRIPTION OF THE DRAWINGS

FIG. 1A is a diagram of a product form of an electronic device with an outward foldable screen according to an embodiment of this application;
FIG. 1B is a schematic diagram of a use manner of an electronic device with an outward foldable screen according to an embodiment of this application;
FIG. 2 is a schematic diagram 1 of interfaces of a first screen and a second screen on an outward foldable screen according to an embodiment of this application;
FIG. 3 is a schematic diagram 2 of interfaces of a first screen and a second screen on an outward foldable screen according to an embodiment of this application;
FIG. 4A and FIG. 4B are a schematic diagram 3 of interfaces of a first screen and a second screen on an outward foldable screen according to an embodiment of this application;
FIG. 5A to FIG. 5D are a schematic diagram 4 of interfaces of a first screen and a second screen on an outward foldable screen according to an embodiment of this application;
FIG. 6A and FIG. 6B are a schematic diagram 5 of interfaces of a first screen and a second screen on an outward foldable screen according to an embodiment of this application;
FIG. 7 is a diagram of a hardware structure of an electronic device according to an embodiment of this application;
FIG. 8 is a diagram of a software architecture of an electronic device according to an embodiment of this application;
FIG. 9A and FIG. 9B are a diagram 1 of time-sequence interaction of a display method according to an embodiment of this application;
FIG. 10A and FIG. 10B are a diagram 2 of time-sequence interaction of a display method according to an embodiment of this application;
FIG. 11A and FIG. 11B are a schematic diagram 6 of interfaces of a first screen and a second screen on an outward foldable screen according to an embodiment of this application;
FIG. 12A and FIG. 12B are a schematic diagram 7 of interfaces of a first screen and a second screen on an outward foldable screen according to an embodiment of this application;
FIG. 13A and FIG. 13B are a schematic diagram 8 of interfaces of a first screen and a second screen on an outward foldable screen according to an embodiment of this application; and
FIG. 14A to FIG. 14C are a schematic diagram 9 of interfaces of a first screen and a second screen on an outward foldable screen according to an embodiment of this application.

### DETAILED DESCRIPTION OF EMBODIMENTS

The following describes technical solutions in the embodiments of this application with reference to the accompanying drawings in the embodiments of this application. In descriptions of the embodiments of this application, terms used in the following embodiments are merely intended to describe purposes of specific embodiments, but are not intended to limit this application. The terms "a", "the", "the foregoing", "this", and "the one" of singular forms used in this specification and the appended claims of this application are also intended to include forms such as "one or more", unless otherwise specified in the context clearly. It should be further understood that in the following embodiments of this application, "at least one" and "one or more" mean one or more than two (including two). The term "and/or" is used to describe an association relationship between associated objects and represents that three relationships may exist. For example, A and/or B may represent the following cases: Only A exists, both A and B exist, and only B exists, where A and B may be singular or plural. The character "/" usually indicates an "or" relationship between the associated objects.

Reference to "an embodiment", "some embodiments", or the like described in this specification means that one or more embodiments of this application include a specific feature, structure, or characteristic described with reference to the embodiments. Therefore, statements "in an embodiment", "in some embodiments", "in some other embodiments", "in other embodiments", and the like in the differences in this specification do not necessarily mean referring to a same embodiment, but mean "one or more but not all embodiments", unless otherwise specially emphasized in other manners. The terms "include", "comprise", "have", and their variants all mean "include but are not limited to", unless otherwise specifically emphasized in other manners. The term "connection" includes a direct connection and an indirect connection, unless otherwise specified. "First" and "second" are merely intended for a purpose of description, and shall not be understood as indicating or implying relative importance or implicitly indicating a quantity of indicated technical features.

In the embodiments of this application, the terms such as "example" or "for example" are used to represent giving an example, an illustration, or a description. Any embodiment or design scheme described as "example" or "for example" in the embodiments of this application should not be explained as being more preferred or having more advantages than another embodiment or design scheme. Exactly, use of the terms such as "example" or "for example" is intended to present a related concept in a specific manner.

A display method provided in this application may be applied to an electronic device with an outward foldable screen, and may be used in a scenario in which the outward foldable screen is used after being folded (that is, in a folded state described below).

The outward foldable screen may be folded to form at least two screens, for example, a first screen and a second screen. It may be understood that the outward foldable screen is a physical screen, and the first screen and the second screen formed by folding are two different display areas on the physical screen. After the outward foldable screen is folded, a display direction of the first screen and a display direction of the second screen are opposite to each other The display direction is a direction of a front surface of the screen, or may be a direction directly facing the front surface of the screen. When the screen is displayed, the display direction is the direction in which the screen is displayed.

Usually, the outward foldable screen may include two manners: vertical folding and horizontal folding. A main difference between vertical folding and horizontal folding is that directions of folding axes (or folding edges) are different. The hinge of the vertical folding manner is perpendicular to a width direction of the outward foldable screen, and the hinge of the horizontal folding manner is perpendicular to a height direction of the outward foldable screen. In the embodiments of this application, the outward foldable screen in the vertical folding manner is mainly used as an example for description.

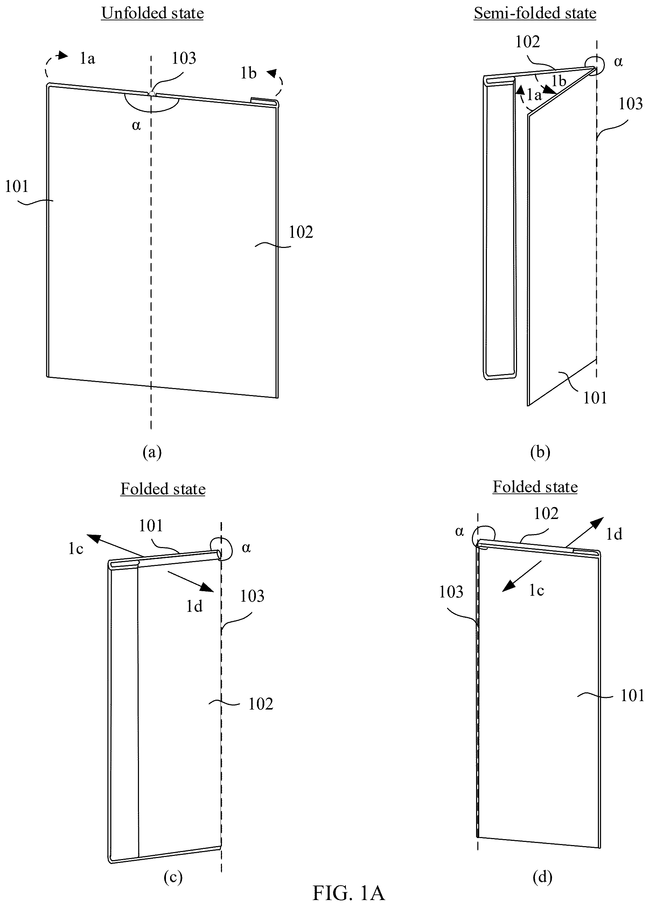

For example, the outward foldable screen in the vertical folding manner may be in an unfolded state (which may be referred to as an unfolded state for short) as shown in (a) in FIG. 1A. In the unfolded state, an included angle between a first screen 101 and a second screen 102 (an included angle along a direction opposite to the folding direction, denoted as α, the same applies to the following) is 180°, and the first screen 101 and the second screen 102 may form a large-screen display user interface. The first screen 101 and the second screen 102 are folded along a hinge 103. For example, the first screen 101 is folded along a direction shown in 1a and/or the second screen 102 is folded along a direction shown in 1b, so that a semi-folded state (which may be referred to as a semi-folded state for short) as shown in (b) in FIG. 1A may be formed. In the semi-folded state, the included angle between the first screen 101 and the second screen 102 satisfies 180°<α<360°. The first screen 101 and the second screen 102 continue to be folded along the hinge 103. For example, the first screen 101 continues to be folded along the direction shown in 1a and/or the second screen 102 continues to be folded along the direction shown in 1b, so that a folded state (which may be referred to as a folded state for short) as shown in (c) inFIG. 1A or (d) in FIG. 1A may be formed. In the folded state, the included angle between the first screen 101 and the second screen 102 is 360°, and a display direction 1c of the first screen 101 and a display direction 1d of the second screen 102 are opposite to each other. It should be noted that (c) in FIG. 1A and (d) in FIG. 1A are only schematic diagrams, of the outward foldable screen in the folded state, seen by a user at different viewing angles.

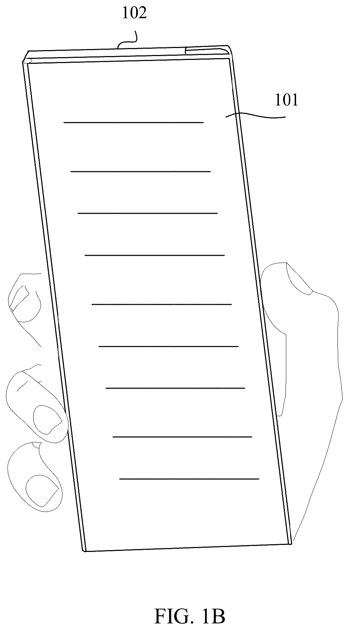

Refer to FIG. 1B. In the folded state, the first screen 101 is generally used facing the user, while the second screen 102 is used facing away from the user. Therefore, the first screen 101 may be used as a main screen of the electronic device in the folded state, and the second screen 102 may be used as a back screen of the electronic device in the folded state.

The main screen may be used to provide main use functions of the electronic device in the folded state, for example, reading, chatting, watching a video, and playing a game, and the back screen may be used to provide some shortcut functions of the electronic device on the foldable screen, for example, scanning a code, presenting a two-dimensional code, and checking the weather. In the following, that the shortcut function provided by the back screen is presenting a two-dimensional code of a target application is mainly used as an example for description. The target application may be an application, for example, a chat application, a travel application, a shopping application, and a payment application, that can provide a two-dimensional code service. The following mainly uses the chat application as an example for description.

In this way, the outward foldable screen in the folded state may present the two-dimensional code by using the back screen while providing the main functions by using the main screen. On the one hand, this may conveniently provide the shortcut function. On the other hand, this may not interrupt use of the main screen.

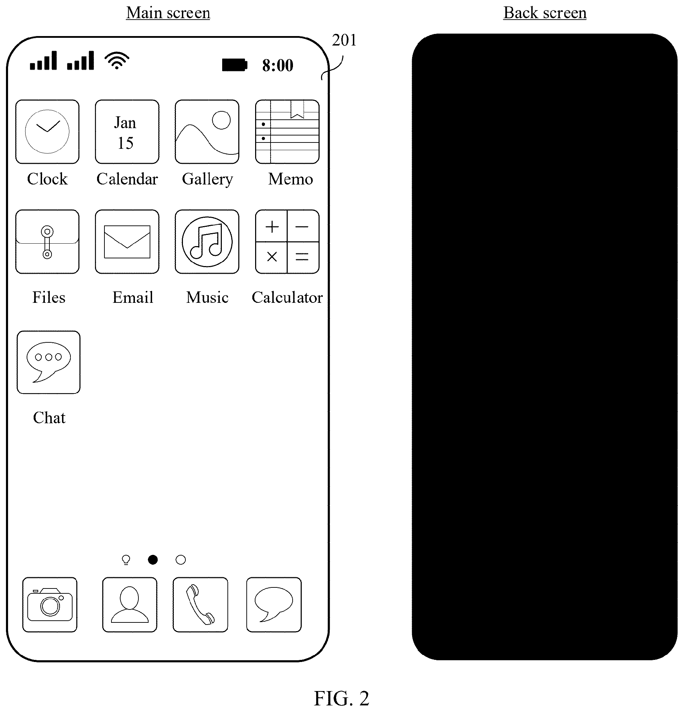

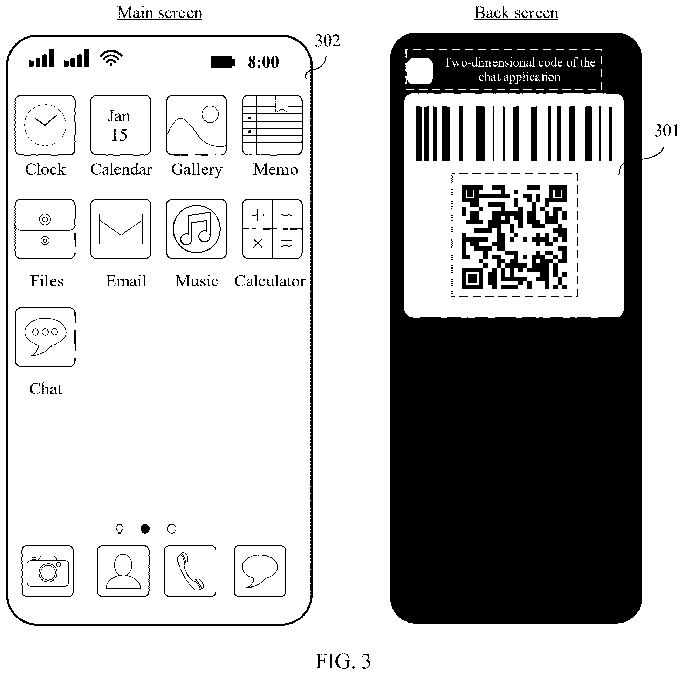

For example, in a case that the outward foldable screen is in the folded state, the electronic device may display an interface 201 shown in FIG. 2 on the main screen, the interface 201 is a home screen of the electronic device, and the back screen is in a black screen state at this time. In response to an operation 1 (for example, double-tapping the back screen), the electronic device may display a two-dimensional code 301 of the chat application shown in FIG. 3 on the back screen for payment, riding, and the like. At the same time, the electronic device keeps displaying the home screen of the electronic device on the main screen, for example, an interface 302 shown in FIG. 3.

Certainly, during actual implementation, the operation 1 may alternatively be an operation other than double-tapping the back screen, for example, an operation of sliding the back screen while pressing a power button, an operation of triple-tapping the back screen, or an operation of touching and holding a preset position of the back screen. This is not specifically limited in the embodiments of this application. The following mainly uses the operation 1 of double-tapping the back screen as an example for description.

In addition, after displaying the two-dimensional code on the back screen, in response to an operation 2, the electronic device may turn off displaying of the two-dimensional code on the back screen. For example, the operation 2 may be an operation of double-tapping the back screen again, or an operation of dragging (for example, dragging to a specific area of the main screen) prompt information for displaying the two-dimensional code of the back screen from the main screen. Alternatively, in response to an event in which the two-dimensional code is scanned or display duration of the two-dimensional code reaches preset duration, the electronic device may also turn off displaying of the two-dimensional code on the back screen. This is not specifically limited in the embodiments of this application.

Usually, the electronic device only needs to provide the two-dimensional code by using the back screen for another electronic device to scan, without providing more controls for the user to operate on the back screen. Therefore, in the electronic device, other content in the two-dimensional code interface of the chat application is blocked on the back screen and only the two-dimensional code is kept visible. In other words, on the back screen shown in FIG. 3, in the actually displayed two-dimensional code interface of the chat application, only a part other than the two-dimensional code is blocked, so that only the two-dimensional code 301 is visible.

However, in the use scenario in which the electronic device displays the two-dimensional code by using the back screen, the following two abnormal cases may occur:

### Abnormal case 1:

In a case that the electronic device displays the home screen by using the main screen and displays the two-dimensional code of the chat application by using the back screen, as shown in FIG. 3, in response to a tap operation on an application icon (which is also referred to as a first icon) of the chat application on home screen, the electronic device discovers that the two-dimensional code interface of the chat application is displayed on the back screen (that is, discovers a reusable application activity (activity)). Therefore, the electronic device may use the two-dimensional code interface of the chat application on the back screen, to display the two-dimensional code interface of the chat application on the main screen, but the two-dimensional code on the back screen disappears.

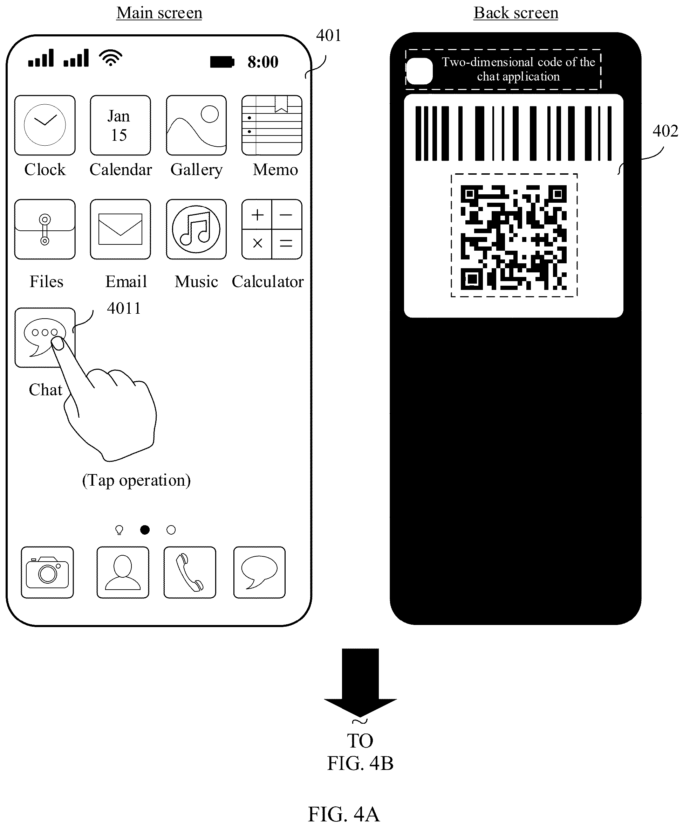

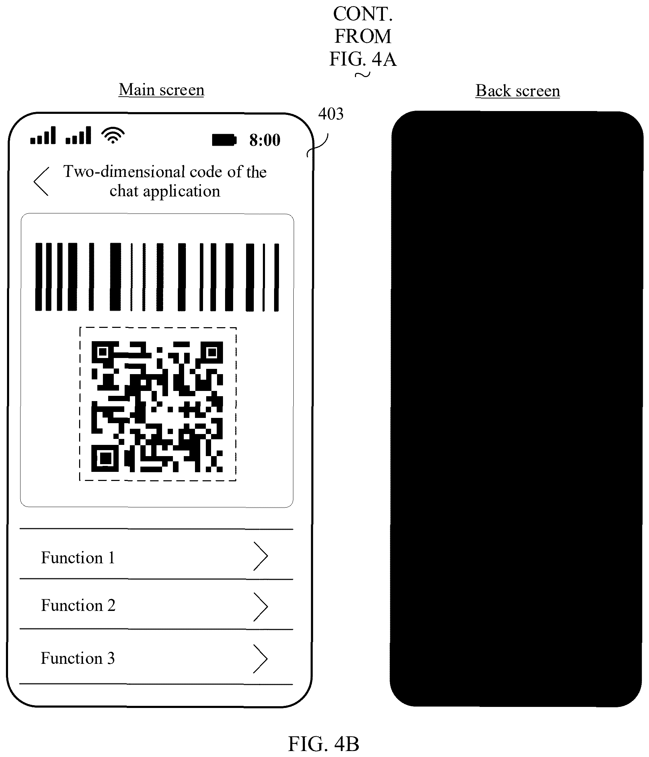

For example, in a case that a two-dimensional code 402 of the chat application shown in FIG. 4A and FIG. 4B is displayed on the back screen of the electronic device, in response to a tap operation of the user on an application icon 4011 of the chat application in an interface 401 shown in FIG. 4A and FIG. 4B, the electronic device may display an interface 403 shown in FIG. 4A and FIG. 4B on the main screen, and the interface 403 is a two-dimensional code interface of the chat application; and the back screen resumes to a black screen as shown in FIG. 4A and FIG. 4B, that is, the two-dimensional code on the back screen disappears. In this way, the electronic device cannot display the two-dimensional code by using the back screen, which is obviously problematic.

### Abnormal case 2:

The electronic device displays an application interface of the chat application in a non-full screen form (for example, a form of a floating window and a form of a mini window) on the main screen, and then in response to a minimization operation, the electronic device may minimize the chat application to an edge position of the main screen.

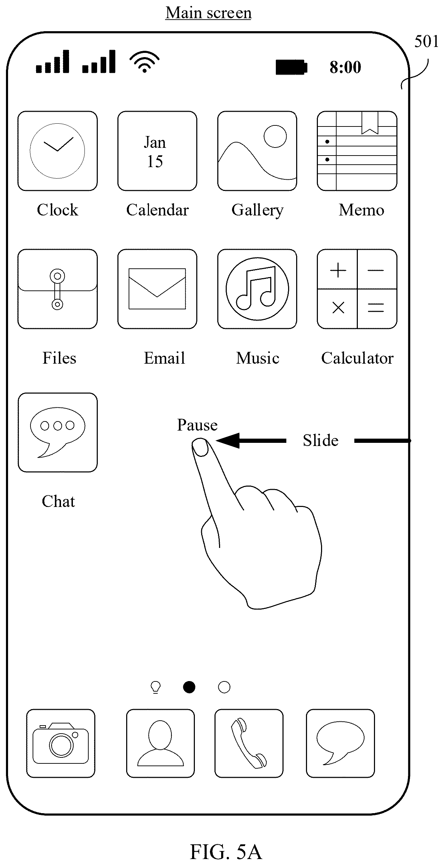

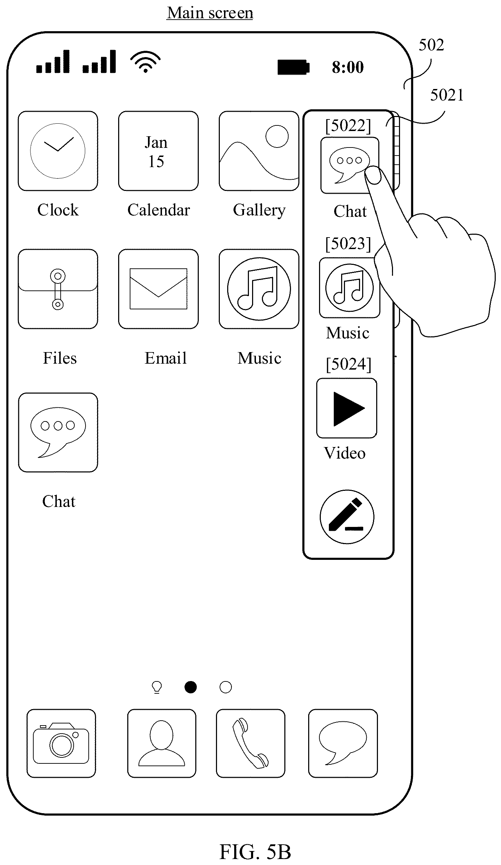

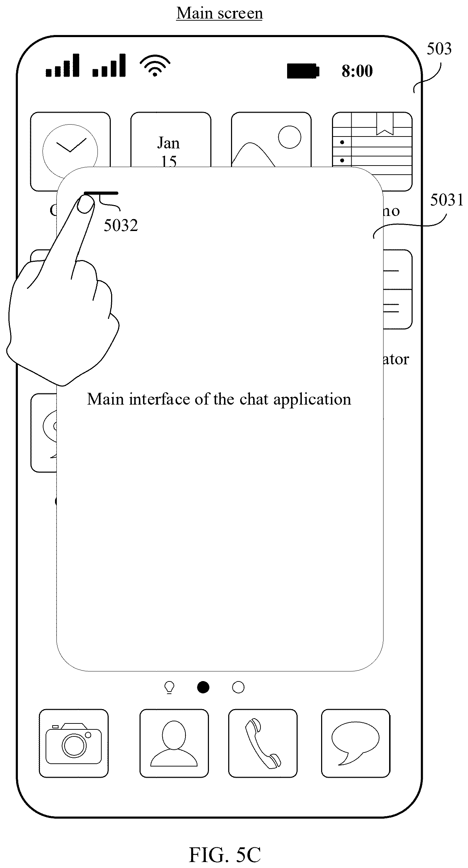

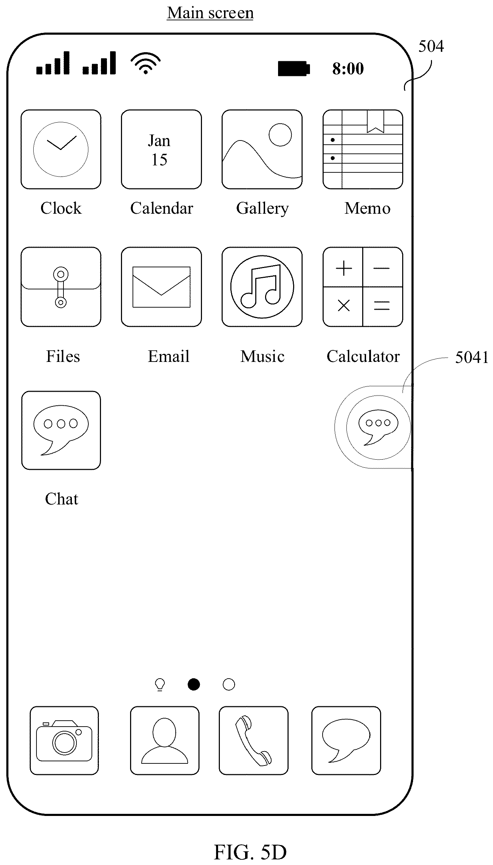

The form of the floating window is used as an example. A process in which the electronic device displays the application interface of the chat application in the form of the floating window on the main screen may be shown in FIG. 5A to FIG. 5D. The electronic device displays an interface 501 shown in FIG. 5A to FIG. 5D on the main screen, and the interface 501 is the home screen of the electronic device. In response to an operation of sliding from right to left for a specific distance and then pausing briefly in the interface 501, the electronic device may display an interface 502 shown in FIG. 5A to FIG. 5D on the main screen, and the interface 502 includes a smart multi-window application bar 5021. The smart multi-window application bar 5021 includes application icons of applications that can be displayed in the form of the floating window, for example, an application icon 5022 of a chat application, an application icon 5023 of a music application, and an application icon 5024 of a video application. In response to a tap operation on the application icon 5022, the electronic device may display an interface 503 shown in FIG. 5A to FIG. 5D on the main screen, and a main interface 5031 of the chat application is displayed in a form of a floating window (which is also referred to as a first window) in the interface 503.

Still refer to FIG. 5A to FIG. 5D. A process in which the electronic device minimizes the chat application to the edge position of the main screen includes: The main interface 5031 of the interface 503 shown in FIG. 5A to FIG. 5D includes a minimization control 5032. In response to a tap operation on the minimization control 5032, the electronic device may display an interface 504 shown in FIG. 5A to FIG. 5D on the main screen, an edge of the interface 504 includes a capsule 5041, and the capsule 5041 includes an application icon (which may be referred to as a floating icon for short or may be referred to a first icon) of the chat application in a floating state. That is, minimizing the chat application to the edge position of the main screen includes: displaying the floating icon of the chat application in the capsule at the edge position of the main screen. Subsequently, in response to a tap operation on the capsule 5041, the electronic device may resume the chat application before being minimized on the main screen to a form of a floating window, for example, displaying the main interface of the chat application in the floating window.

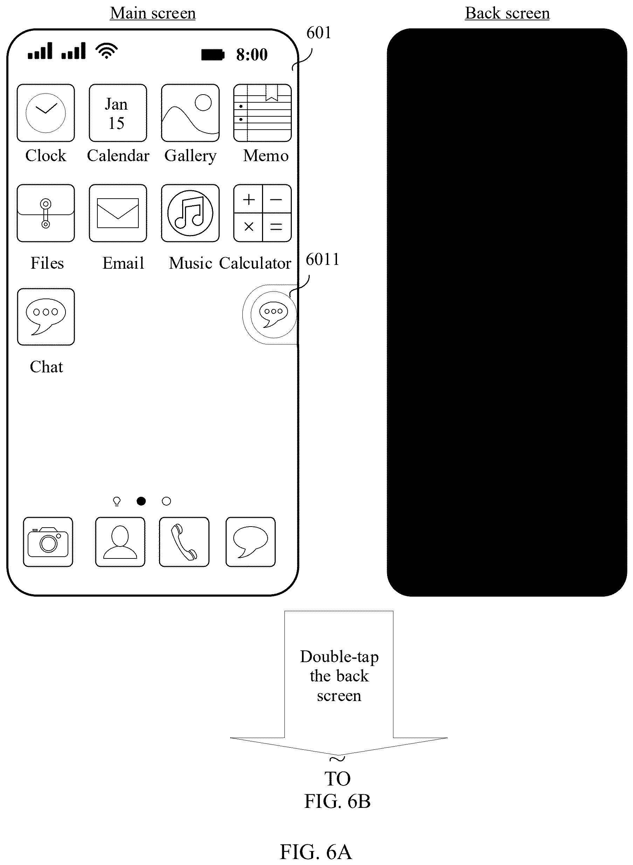

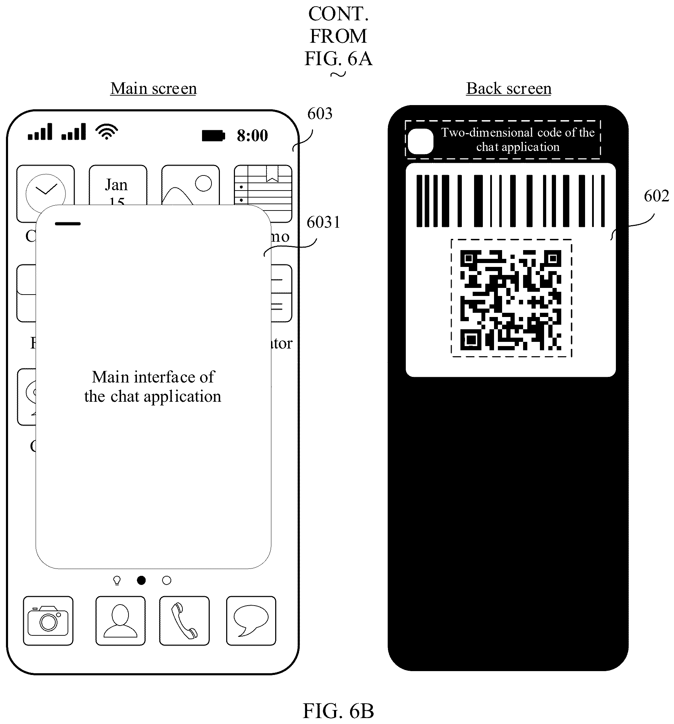

In a case that the electronic device minimizes the application interface to the edge position of the main screen, for example, a case shown in an interface 601 in FIG. 6A and FIG. 6B (the same as the interface 504 shown in FIG. 5A to FIG. 5D), in response to an operation of opening the two-dimensional code on the back screen (for example, an operation of double-tapping the back screen), the electronic device discovers that the application icon of the minimized chat application is displayed on the main screen (that is, discovers a reusable activity), for example, a floating icon in a capsule 6011 in the interface 601 shown in FIG. 6A and FIG. 6B. Therefore, the electronic device may use the application icon of the minimized chat application on the main screen, to display the two-dimensional code of the chat application on the back screen. A procedure of displaying the two-dimensional code of the chat application on the back screen includes: launching the chat application, displaying the main interface of the chat application, and then jumping from the main interface to the two-dimensional code interface by using a jump program. Correspondingly, when the electronic device uses the application icon of the minimized chat application on the main screen, the main interface of the chat application is displayed on the main screen first, that is, the minimized chat application is expanded; and then the main interface on the main screen can jump to the two-dimensional code interface displayed on the back screen.

For example, in a case that the electronic device displays the interface 601 shown in FIG. 6A and FIG. 6B on the main screen, in response to the operation of double-tapping the back screen, the electronic device not only displays a two-dimensional code 602 of the chat application shown in FIG. 6A and FIG. 6B on the back screen, but also expands the minimized application interface on the main screen to a main interface 6031 of the chat application in an interface 603 shown in FIG. 6A and FIG. 6B. In other words, in a case that the electronic device does not receive a tap operation on the capsule 6011 in the interface 601, the electronic device cancels minimized displaying and resumes to a form of a floating window, which is obviously problematic.

The embodiments of this application provide a display method, applied to a scenario in which an outward foldable screen in a folded state is used. After discovering a reusable activity, the electronic device may further determine whether it is an abnormal reuse case. For example, the abnormal reuse case includes a case of reusing a two-dimensional code interface on the back screen on the main screen, and a case of reusing the minimized chat application on the main screen on the back screen. If it is the abnormal reuse case, the electronic device does not perform reusing, but performs processing based on a case that there is no reusable activity. In this way, it can be avoided that abnormal reuse occurs, for example, avoid the foregoing abnormal case 1 or abnormal case 2, and ensure that information displayed on the main screen and information displayed the back screen do not affect each other.

For example, the electronic device may be any device, for example, a mobile phone, a tablet computer, or a notebook computer, in which a display can be configured to be an outward foldable screen.

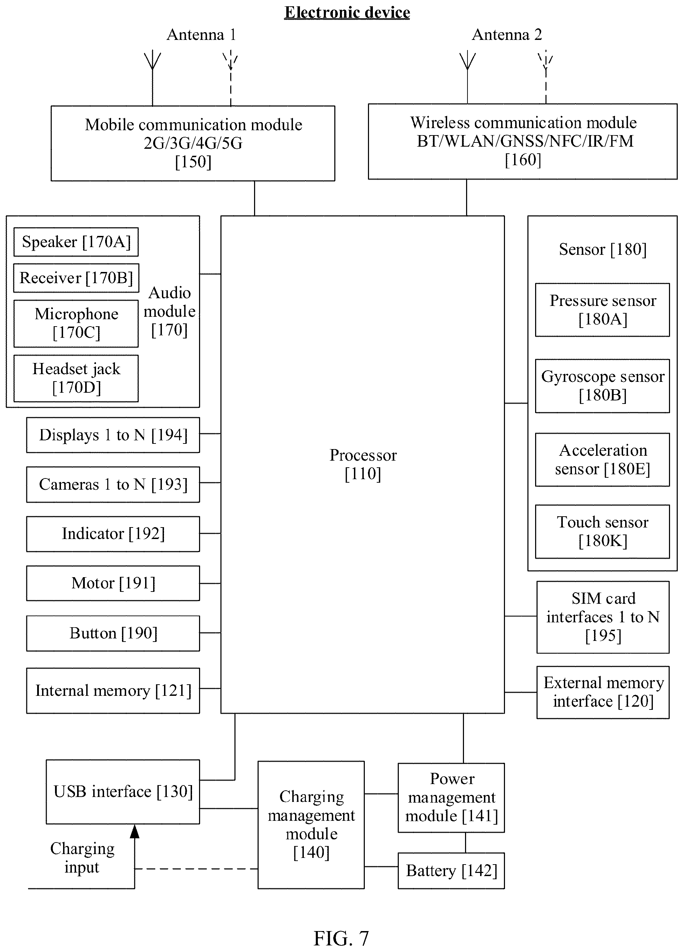

Refer to FIG. 7. The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor 180, a button 190, a motor 191, an indicator 192, a camera 193, a display 194, a subscriber identity module (subscriber identification module, SIM) card interface 195, and the like.

It may be understood that the structure illustrated in the embodiments of the present invention does not constitute a specific limitation on the electronic device. In some other embodiments of this application, the electronic device may include more or fewer components than those shown in the figure, or some components may be combined, or some components may be split, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A wireless communication function of the electronic device may be implemented through the antenna 1, the antenna 2, the mobile communication module 150, the wireless communication module 160, the modem processor, the baseband processor, and the like.

The electronic device implements a display function through the GPU, the display 194, the application processor, and the like. The GPU is a microprocessor for image processing and is connected to the display 194 and the application processor. The GPU is configured to perform mathematical and geometric computation, and render an image. The processor 110 may include one or more GPUs that execute program instructions to generate or change display information.

The display 194 is configured to display an image, a video, and the like. In the embodiments of this application, the display 194 includes an outward foldable screen, for example, the outward foldable screen shown in FIG. 1A.

The electronic device may implement a photographing function through the ISP, the camera 193, the video codec, the GPU, the display 194, the application processor, and the like.

The electronic device may implement an audio function, for example, music playing and recording, through the audio module 170, the speaker 170A, the receiver 170B, the microphone 170C, the headset jack 170D, the application processor, and the like.

Further, the sensor 180 may include, but is not limited to, a pressure sensor 180A, a gyroscope sensor 180B, an acceleration sensor 180E, and a touch sensor 180K.

The pressure sensor 180A is configured to sense a pressure signal, and may convert the pressure signal to an electrical signal. In some embodiments, the pressure sensor 180A may be disposed on the display 194.

The gyroscope sensor 180B is configured to determine a motion posture of the electronic device. In some embodiments, an angular velocity of the electronic device around three axes (for example, x, y, and z axes) may be determined by the gyroscope sensor 180B.

The acceleration sensor 180E may detect an acceleration value of the electronic device in each direction (generally in three axes). When the electronic device is stationary, a magnitude and a direction of a gravity may be detected. The acceleration sensor 180E may be further configured to identify a posture of the electronic device, and is used in an application such as switching between a landscape mode and a portrait mode or a pedometer.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device at a position different from that of the display 194.

In some embodiments, the electronic device may use the sensor 180 to collect an operation of opening a two-dimensional code on a back screen, for example, a signal of an operation of double-tapping the back screen, and detect a signal of tapping an application icon on a home screen and the like.

The software system of the electronic device may use a layered architecture, an event-driven architecture, a microkernel architecture, a microservice architecture, or a cloud architecture. In the embodiments of this application, an Android^{™} system with the layered architecture is used as an example to describe a software structure of the electronic device.

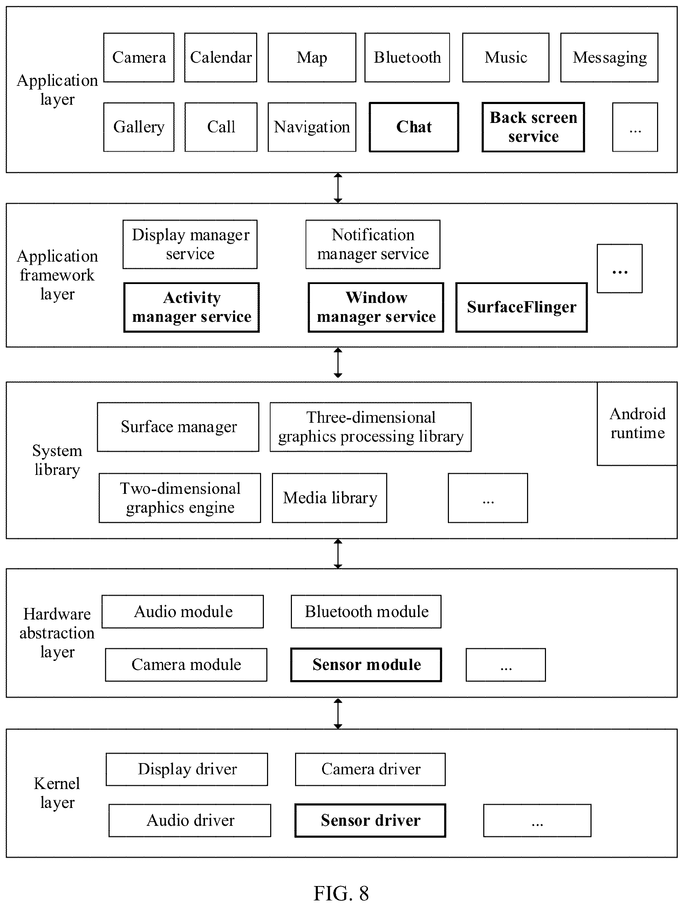

In the layered architecture, software is divided into several layers, and each layer has a clear role and task. The layers communicate with each other through a software interface. In some embodiments, as shown in FIG. 8, an Android^{™} system is divided into five layers: an application layer, an application framework layer, Android^{™} runtime (Android^{™} runtime) and a system library, a hardware abstraction layer (hardware abstraction layer, HAL), and a kernel layer from top to bottom.

The application layer may include a series of application packages.

As shown in FIG. 8, the application package may include applications such as Camera, Gallery, Calendar, Call, Map, Navigation, Bluetooth, Music, Messaging, Chat, and a back screen service (TapTapService).

For example, the back screen service may be used to provide various shortcut functions on the back screen of the electronic device, for example, presenting a two-dimensional code. The two-dimensional code may be used for payment, boarding, identity recognition, and the like. This is not limited in the embodiments of this application.

The application framework layer provides an application programming interface (application programming interface, API) and a programming framework for an application at the application layer. The application framework layer includes some predefined functions.

As shown in FIG. 8, the application framework layer may include a window manager service (window manager service, WMS), a notification manager service (notification manager service, NMS), an activity manager service (activity manager service, AMS), a display manager service (display manager service, DMS), and a SurfaceFlinger.

The WMS is used for window management and window animation management, and serves as a transit point for an input system. The WMS may also obtain a size of the display, determine whether there is a status bar, perform screen locking, take a screenshot, and the like.

The NMS enables an application to display notification information in a status bar, and may be configured to convey a notification message. The NMS may automatically disappear after a short pause without requiring user interaction. For example, the NMS is for notifying download completion, providing a message prompt, and the like. The notification manager may alternatively be a notification that appears in a top status bar of the system in a form of a graph or a scroll bar text, for example, a notification of an application that is run in a background, or may be a notification that appears on a screen in a form of a dialog window. For example, text information is prompted in the status bar, an alert tone is made, the electronic device vibrates, or the indicator blinks.

The AMS may be used to start, switch, and schedule a system component (for example, an activity, a service, a content provider, and a broadcast receiver), and manage and schedule an application process.

The DMS may be used to refresh an application view (view), manage a frame buffer (frame buffer), and serve as a dual-screen display channel to achieve display switching, for example, switching to a main screen or a back screen for displaying.

The SurfaceFlinger may be used to control a refresh rate, and manage and control rendered content, for example, perform processing such as image synthesis.

The WMS, the NMS, the AMS, and the SurfaceFlinger are all belong to a system server (system server). The system server (system server) is a process that provides many subsystem services such as the WMS, the NMS, the AMS, and the SurfaceFlinger. Each subsystem service runs in a form of a thread, waits for a request from the application, processes the request, and returns a result to the application.

The Android^{™} runtime includes a core library and a virtual machine. The Android^{™} runtime is responsible for scheduling and managing an Android system.

The kernel library includes two parts: a performance function that needs to be called in Java language and a kernel library of Android.

The application layer and the application framework layer run in the virtual machine. The virtual machine executes java files at the application layer and the application framework layer as binary files. The virtual machine is configured to perform functions such as object life cycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a two-dimensional (2D) graphics engine (for example, an SGL).

The surface manager is configured to manage a display subsystem and provide fusion of 2D and 3D layers for a plurality of applications. The media library supports playback and recording in a plurality of commonly used audio and video formats, and static image files. The media library may support a plurality of audio and video coding formats, for example, MPEG-4, H.264, MP3, AAC, AMR, JPG, and PNG. The three-dimensional graphics processing library is used to implement three-dimensional graphics drawing, image rendering, composition, layer processing, and the like. The 2D graphics engine is a drawing engine for 2D drawing.

The hardware abstraction layer is an abstract layer structure between the kernel layer and an upper layer, and is a package driven by the kernel layer to provide a unified interface to the upper layer. As a result, it unnecessary for an upper-layer application to know how lower-layer hardware works, shielding underlying implementation details.

The hardware abstraction layer may provide a standard interface, to display device hardware functions to the higher-level application framework layer. The hardware abstraction layer includes a plurality of library modules, and each module implements an interface for a specific type of hardware component. When the application framework layer requests to access device hardware, the system loads a corresponding library module for the hardware component. A vendor may define an interface at the hardware abstraction layer.

The library module may include an audio (Audio) module, a Bluetooth (bluetooth) module, audio camera (Camera) module, a sensor (Sensors) module, and the like.

The sensor module is an interface for implementing sensors such as an acceleration sensor, a gyroscope sensor, a pressure sensor, and a touch sensor, and is used by the application framework layer to access the above sensors.

The kernel layer is a layer between hardware and software. The kernel layer includes at least a display driver, a camera driver, an audio driver, and a sensor driver.

The display method provided in the embodiments of this application may be performed in an electronic device having the hardware structure shown in FIG. 7 and the software architecture shown in FIG. 8. In the embodiments of this application, a case of reusing an activity is further excluded, and a case of abnormal reuse, for example, reuse in the foregoing abnormal case 1 and abnormal case 2, is excluded.

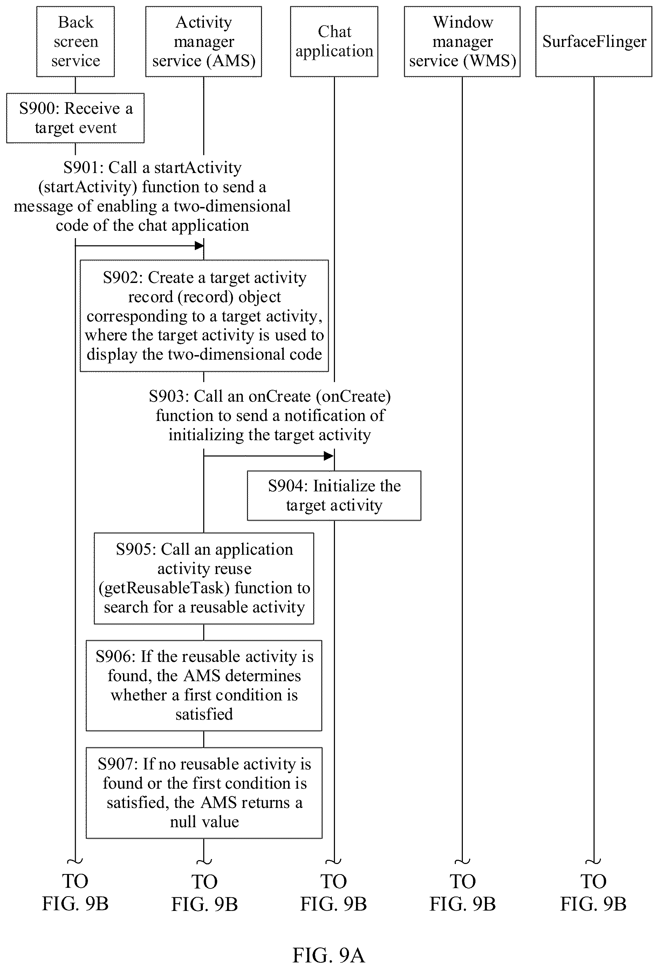

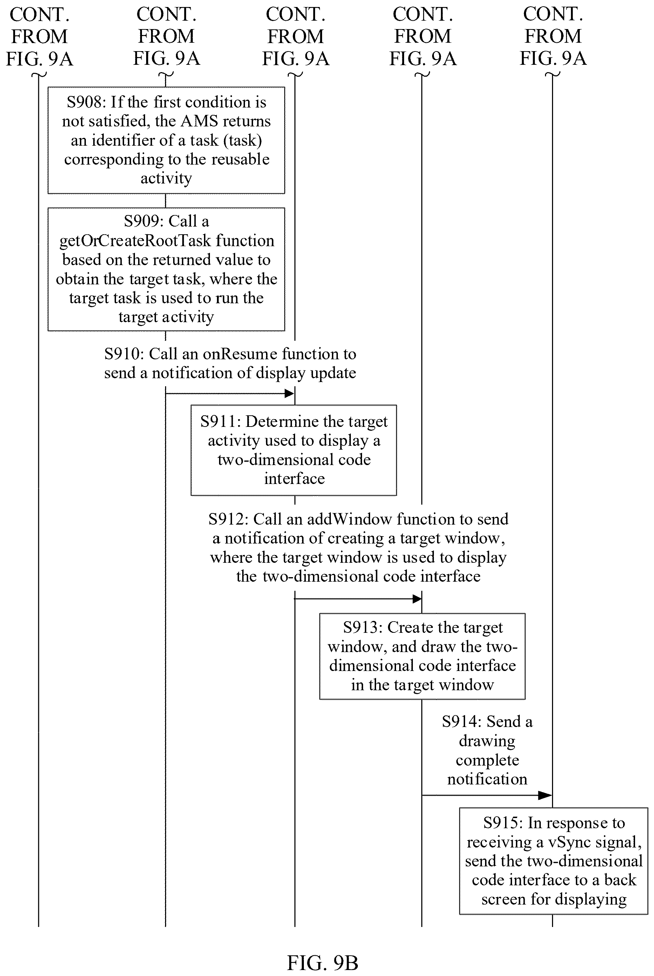

Specifically, as shown in FIG. 9A and FIG. 9B, in a case that the electronic device displays the floating icon of the chat application on the main screen, displaying the two-dimensional code of the chat application on the back screen is further used as an example, to describe specific implementation of excluding abnormal reuse.

S900: A back screen service receives a target event.

Before S900, a sensor may detect an operation event, and a sensor module (for example, the sensor module of the hardware abstraction layer) may identify the operation event; and when the operation event is identified as a target event of double-tapping the back screen, report the target event to the back screen service. In this way, the back screen service can receive the target event, and the target event is used to enable the two-dimensional code.

In some embodiments, an acceleration sensor disposed on the back screen detects an operation event by collecting a pressure signal of the back screen. In comparison with a manner of detecting the operation event through a touch sensor, in this embodiment, the operation event is detected through the acceleration sensor, so that there is no need to keep the touch sensor working for a long time. This may save power consumption of the back screen.

Certainly, when an operation 1 is another operation, the target event is also different. For example, if the operation 1 is an operation of sliding the back screen while pressing a power button, the target event is an event in which the power button is pressed and the back screen receives the sliding operation.

S901: The back screen service calls a startActivity (startActivity) function to send a message of enabling the two-dimensional code of the chat application to the AMS.

Enabling may be generally understood as pulling up. The two-dimensional code may be a two-dimensional code displayed on the back screen by default, or a two-dimensional code selected by the user to be displayed on the back screen.

If a back screen application calls the startActivity function, the two-dimensional code may be displayed by starting one Activity (for example, a target Activity below).

In some embodiments, the back screen service may carry a message for pulling up the two-dimensional code by using an intent (intent) object.

For example, the intent object includes an action (action) parameter, and the action parameter corresponds to the Activity. Subsequently, the AMS may determine the two-dimensional code of the chat application that needs to be displayed by querying the Activity corresponding to the action parameter.

For another example, the intent object includes an application package name of the chat application and a category name corresponding to the two-dimensional code interface of the chat application. Subsequently, the AMS may determine the two-dimensional code of the chat application that needs to be displayed based on the application package name and the category name.

S902: The AMS creates a target activity record (record) object corresponding to the target activity, where the target activity is used to display the two-dimensional code.

The AMS may determine the two-dimensional code of the chat application that needs to be displayed by parsing the message for pulling up the two-dimensional code. Therefore, the AMS may create the corresponding target ActivityRecord object. The target ActivityRecord object corresponds to the target Activity. In this way, the chat application may identify the target Activity based on the target ActivityRecord object.

In addition, the message for pulling up the two-dimensional code (for example, the intent object) may also include identification information of the back screen service, for example, an application package name of the back screen service and an application ID of the back screen service. In this way, after receiving the intent object, the AMS may also determine that the message is sent by the back screen service based on the identification information of the back screen service, to determine that the display area of the target Activity is the back screen. Subsequently, when the WMS creates a target window based on the target Activity to display the target two-dimensional code (as shown in S913 below), a display area ofthe target window may be set as the back screen.

After the target ActivityRecord object is created on an AMS side, the target activity is in a created state. Subsequently, the AMS may manage a life cycle of the target Activity. For example, the AMS may call a plurality of functions including an onCreate (onCreate) function, an onStart (onStart) function, an onResume (onResume) function, an onPause (onPause) function, and an onStop (onStop) function, to manage the life cycle of the target Activity.

It should be noted that the AMS may query a reusable activity between the onStart function and the onResume function that are called, and further exclude reuse in the foregoing abnormal case 1 and abnormal case 2, as shown in S905 to S909 below. Therefore, the following mainly describes the process related to the onStart function (as shown in S903 and S904 below) and the onResume function (as shown in S910 and S911 below), but this does not mean that the onCreate function, the onPause function, and the onStop function are not called to manage the life cycle of the target activity.

S903: The AMS calls the onCreate (onCreate) function to send a notification of initializing the target activity to the chat application.

S904: The chat application initializes the target activity.

The chat application completes initialization work in an activity startup process based on the onCreate function.

S905: The AMS calls an application activity reuse (getReusableTask) function to search for the reusable activity.

The getReusableTask function may be used by the AMS to search for the reusable activity from activities managed by the AMS. In the example scenario combined in FIG. 9A and FIG. 9B, the AMS may find an activity for displaying the floating icon on the main screen. In other words, the reusable activity is the activity used to display the floating icon on the main screen.

The specific implementation of searching for the reusable activity is not limited in this embodiment of this application. For example, the reusable activity needs to satisfy one or more of the following conditions:
Condition 1: Types of the activities match.

On one hand, a type of the reusable activity is the same as a type of the target activity.

On the other hand, the reusable activity is a top activity of the task (task). It may be understood that the top activity is a visible activity. Therefore, it is necessary to reuse the top activity only if a type of the top activity is the same as that of the target activity. Otherwise, an invisible activity is reused.

It should be noted that each Activity runs in a Task stack. One Task stack may have a plurality of Activities, and a same Activity may also be in different Task stacks. An Activity at the top of the Task stack (which may also be referred to as an activity at the top of the task, for example, TaskTopActivity) is an activity that the user is currently interacting with.

Condition 2: The reusable activity cannot be an activity in a preset scenario, to avoid impact of reuse on the preset scenario. For example, the preset scenario includes a voice session (voice session) scenario.

Condition 3: Initiating users of the activities are the same: an initiating user of the reusable activity is the same as an initiating user of the target activity, for example, user IDs are the same, so that reuse may be performed.

Condition 4: Category names of the activities are the same: a category name of the reusable activity is the same as a category name of the target activity, so that reuse may be performed.

Condition 5: An affinity intent (affinityintent) of the target activity matches an affinity intent (affinityintent) of a task of the reusable activity. In each application, the affinity intents of the activity and the task are preconfigured. The AMS may obtain the affinity intent of the target activity from the chat application and the affinity intent of the task of the reusable activity. If the two are the same, reuse may be performed.

Usually, if any of the foregoing conditions 1 to 3 is not satisfied, reuse cannot be performed. On this basis, if at least one of the conditions 4 and 5 is satisfied, reuse can be performed. In this specification, the reusable activity may be further searched for based on the category name mainly on the premise that the conditions 1 to 3 are satisfied. That is, the reusable activities found in this specification are all activities whose category name is the same as the category name of the target activity.

S906: If the reusable activity is found, the AMS determines whether the first condition is satisfied.

In the example scenario combined in FIG. 9A and FIG. 9B, the AMS finds the reusable activity, and based on this, the AMS may also determine that the first condition is satisfied.

If the first condition is satisfied, it indicates that the reusable activity cannot be reused, for example, belongs to the abnormal reuse case in the foregoing abnormal case 1 or abnormal case 2; or if the first condition is not satisfied, it indicates that the reusable activity can be reused. It may be seen that the AMS may exclude the case that there is the reusable activity but the activity cannot be reused through determining of the first condition.

In some embodiments, the first condition includes: a caller of the target activity is the back screen service, and the reusable activity is displayed in a non-full screen form (for example, a minimization form, a form of a floating window, and a form of a mini window), for example, the scenario of the foregoing abnormal case 2.

If the caller of the target activity is the back screen service, it indicates that the target activity is used to display information on the back screen. It may be understood that the non-full screen display format is usually applied to the main screen. Therefore, if the reusable activity is displayed in the non-full screen form, it indicates that the reusable activity is used to display information on the main screen. It may be seen that in this embodiment, the AMS may determine, by using the first condition, a cross-screen reuse case, namely, a case that the target activity is on the back screen and the reusable activity is on the main screen, as a case that reuse cannot be performed.

For example, when the following conditions are satisfied, the AMS may determine that the first condition is satisfied:
TextUtils.equals(callingPackage,
   HwActivityTaskManagerServiceEx.SHORTCUT_QRCODE_PACKAGEANME) //A package name of the caller (callingPackage) is the back screen service (SHORTCUT_QRCODE_PACKAGEANME), that is, the caller is the back screen service, which may also be understood as the target activity used to display information on the back screen; and
&& reusedActivity.getWindowingMode() != WINDOWING_MODE_FULLSCREEN //And the form of the window of the reusable activity (reusedActivity) is a non-full screen form (!= WINDOWING_MODE_FULLSCREEN), which may also be understood as the reusable activity used to display information on the main screen.

For example, the example scenario combined in FIG. 9A and FIG. 9B satisfies that the caller is the back screen service, and the form of the window of the reusable activity (the activity used to display the floating icon on the main screen) is a non-full screen form. Therefore, the AMS may determine that the first condition is satisfied.

On the contrary, in this embodiment, if the caller is not the back screen service, or the form of the window of the reusable activity is not a non-full screen form, it indicates a scenario in which the target activity that does not belong to the back screen reuses the activity on the main screen. Therefore, the AMS may determine that reuse can be performed.

Further, the first condition includes: a source record (sourceRecord) is null, for example, sourceRecord == null. In practice, in a scenario in which the two-dimensional code is pulled up by using the back screen service, sourceRecord is a null value. In a scenario of entering another interface by using the back screen service, for example, entering an application market by using the back screen service, sourceRecord is not null. Then, if sourceRecord is null, it indicates that the two-dimensional code is pulled up by using the back screen service; or if sourceRecord is not null, it indicates that the two-dimensional code is not pulled up by using the back screen service. Therefore, when sourceRecord is null, the AMS determines that the first condition is satisfied, and may further accurately exclude reuse of a case that the two-dimensional code is pulled up by using the back screen service and the form of the window of the reusable activity is not the full-screen form.

In some other embodiments, the first condition includes: the caller of the target activity is a main screen application, and the reusable activity is used to display information on the back screen, for example, the scenario of the foregoing abnormal case 1.

If the caller of the target activity is the main screen application, it indicates that the target activity is used to display the information on the main screen, and the reusable activity displays the information on the back screen. It may be seen that in this embodiment, the AMS may determine, by using the first condition, another cross-screen reuse case, namely, a case that the target activity is on the main screen and the reusable activity is on the back screen, as a case that reuse cannot be performed.

For example, when the following conditions are satisfied, the AMS may determine that the first condition is satisfied:
sourceRecord.getDisplayId() == Display. DEFAULT DISPLAY //The caller is the main screen (DEFAULT_DISPLAY) application; and
&& reusedActivity.getDisplayId() == DisplayEx.SUB_BUILTIN_DISPLAY //The reusable activity (reusedActivity) is displayed on the back screen (SUB_BUILTIN_DISPLAY).

On the contrary, in this embodiment, if the caller is not the main screen application, or the reusable activity is used to display information on the back screen, it indicates a scenario in which the target activity that does not belong to the main screen reuses the activity scenario of the main screen. Therefore, the AMS may determine that reuse can be performed.

Further, the first condition includes: sourceRecord is not null, for example, sourceRecord != null. In practice, in a scenario in which the application is normally started by using an application icon of the main screen application, sourceRecord is not null; however, in a scenario in which the two-dimensional code is pulled up by using the back screen service, sourceRecord is null. In other words, the AMS may quickly identify a scenario in which the two-dimensional code is not pulled up by using the back screen service by checking that sourceRecord is not null.

Certainly, the AMS may also combine the first conditions in the foregoing two embodiments in an OR manner, that is, provided that the first condition in one embodiment is satisfied, it is determined that the first condition is satisfied.

For example, when the following conditions are satisfied, the AMS may determine that the first condition is satisfied:

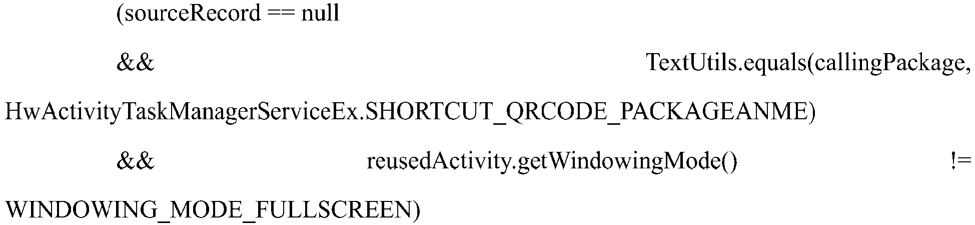

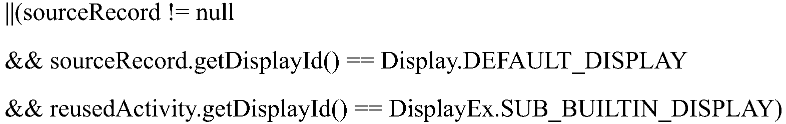

In other words, when the caller of the target activity is the back screen service, the two-dimensional code interface is pulled up by using the back screen service, and the reusable activity is displayed in a non-full screen form, or when the caller of the target activity is the main screen application, and the reusable activity is used to display the information on the back screen, it may be determined that the first condition is satisfied. In this way, the AMS may exclude a plurality of cross-screen reuse scenarios by using the first condition.

Based on the foregoing descriptions of S906, it may be known that the first conditions in the foregoing two embodiments are essentially to determine whether it is a cross-screen reuse case. Therefore, the first condition may also be simplified as follows: the target activity and the reusable activity are used to display information on different screens. For example, if the target activity is used to display information on the main screen, and the reusable activity is used to display information on the back screen, the first condition is satisfied. For another example, the target activity is used to display information on the back screen, and the reusable activity is used to display information on the main screen, the first condition is also satisfied. In this way, the AMS may determine the cross-screen reuse case as a case that reuse cannot be performed.

S907: If no reusable activity is found or the first condition is satisfied, the AMS returns a null value.

In the example scenario combined in FIG. 9A and FIG. 9B, the AMS may determine that the first condition is satisfied, and therefore returns a null value, for example, null.

If the AMS returns the null value, it indicates that there is no task that can be reused. It should be noted that although it is the reusable activity that is searched for in the foregoing, during actual reuse, the task that runs the reusable activity is reused in units.

If no reusable activity is found or the first condition is satisfied, this belongs to a scenario in which there is no reusable activity. Therefore, the AMS returns the null value.

Certainly, the AMS may also indicate that there is no reusable task by returning other content. For example, the AMS may return a value such as true or 1, to indicate that there is no task that can be reused.

S908: If the first condition is not satisfied, the AMS returns an identifier of the task (task) corresponding to the reusable activity.

It should be noted that in the example scenario combined in FIG. 9A and FIG. 9B, the AMS determines that the first condition is satisfied, and therefore does not execute the branch S908.

If the AMS returns the identifier of the task, it indicates that there is a reusable task, and the reusable task is the task indicated by the identifier of the task. The reusable task is a task that runs the reusable activity.

In addition, the AMS returns the identifier of the task to facilitate subsequent reuse.

S909: The AMS calls a getOrCreateRootTask function based on a return value to obtain the target task, where the target task is used to run the target activity.

The getOrCreateRootTask function includes two processing manners: get (that is, get) and create (that is, create).

If the return value is null, the AMS may call the getOrCreateRootTask function and execute the create processing manner, to create the target task. In the example scenario combined in FIG. 9A and FIG. 9B, the return value is null, and the AMS creates a new target task. In this way, the AMS may obtain a task that is different from the reusable task. For example, an identifier of the target task is different from that of the reusable task.

If the return value is the identifier of the task, the AMS may call the getOrCreateRootTask function and execute the get processing manner, to obtain the reusable task indicated by the identifier of the task. In this case, the target task is the reusable task, and identifiers of the two are the same. It should be noted that in the example scenario combined in FIG. 9A and FIG. 9B, the return value is a null value, so that the AMS executes the get processing manner, to obtain the reusable task.

During actual implementation, one or more steps in S905 to S909 above may be executed by an AMS main thread, or may be executed by one or more sub-threads under the AMS main thread. This is not specifically limited in this embodiment of this application. For example, S905 may be executed by the AMS main thread, or may be executed by a root window container (RootWindowContainer) sub-thread under the AMS main thread.

S910: The AMS calls the onResume function to send a notification of display update to the chat application.

The onResume function is a function called by the AMS after the target activity is in a resumed state, so the onResume function may be referred to as a resume function. However, from a perspective of function, the onResume function is a function used to prepare the activity before displaying. Therefore, the onResume function may also be referred to as a display preparation function.

S911: The chat application determines the target activity used to display the two-dimensional code interface.

The chat application may determine content that the target activity is used to display by executing the onResume function. For example, in the example scenario combined with FIG. 9A and FIG. 9B, the target activity is used to display the two-dimensional code interface.

It may be understood that the top activity in the reusable task is visible to the user. Therefore, if the target task is the reusable task, an object of onResume is TaskTopActivity in the target task.

S912: The chat application calls an addWindow function to send, to the WMS, a notification of creating a target window, where the target window is used to display the two-dimensional code interface.

S913: The WMS creates the target window, and draws the two-dimensional code interface in the target window.

The WMS may add a view tree of the target window by executing the addWindow function, to create the target window. Further, the WMS may draw the two-dimensional code interface into the target window, to display the two-dimensional code interface in the target window.

S914: The WMS sends a drawing complete notification to the SurfaceFlinger.

S915: In response to receiving a vSync signal, the SurfaceFlinger sends the two-dimensional code interface to the back screen for displaying.

After drawing is completed, there are steps such as synthesis, which are not described in detail in this specification.

It may be understood that after each time of refreshing the display, a vSync signal is sent to the SurfaceFlinger once. In this case, the SurfaceFlinger sends the drawn two-dimensional code interface to the display to be displayed as a new frame of image.

It should be noted that to mainly display the two-dimensional code on the back screen without providing more controls for the user to operate, the WMS may also create a window to block content other than the two-dimensional code in the two-dimensional code interface. This is not specifically limited in this embodiment of this application.

In other words, when the floating icon of the chat application is displayed on the main screen, and further, in a scenario in which the two-dimensional code of the chat application is displayed on the back screen, the electronic device may further determine that the first condition is satisfied after querying the activity for displaying the floating icon of the chat application on the main screen. Therefore, the electronic device creates the new target task to run the target activity instead of using the reusable task to run the target activity. In this way, in a case that the floating icon of the chat application is displayed on the main screen, further displaying the two-dimensional code on the back screen does not affect displaying of the floating icon on the main screen. For example, the floating icon is not expanded into a form of a floating window.

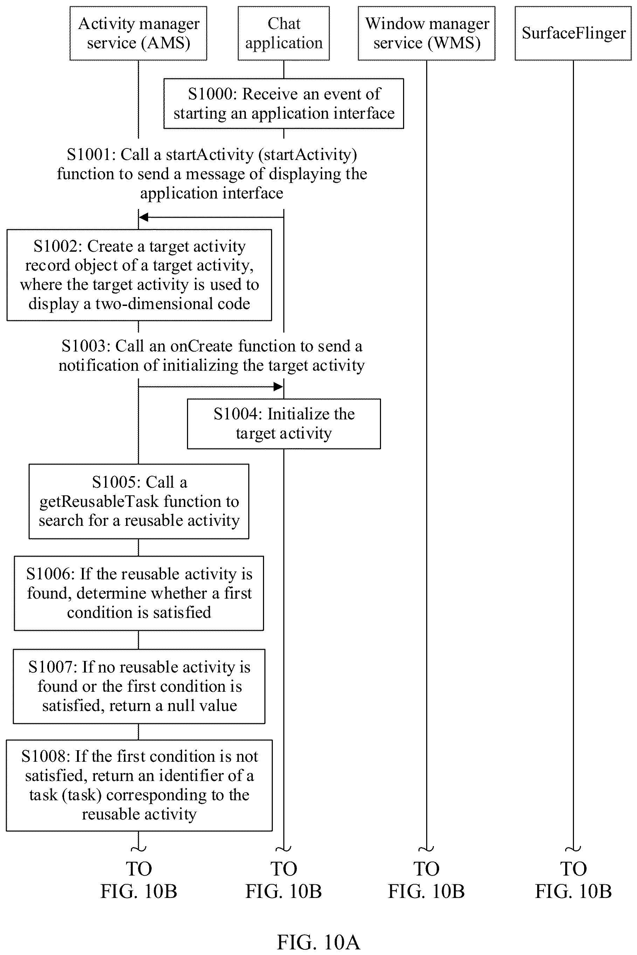

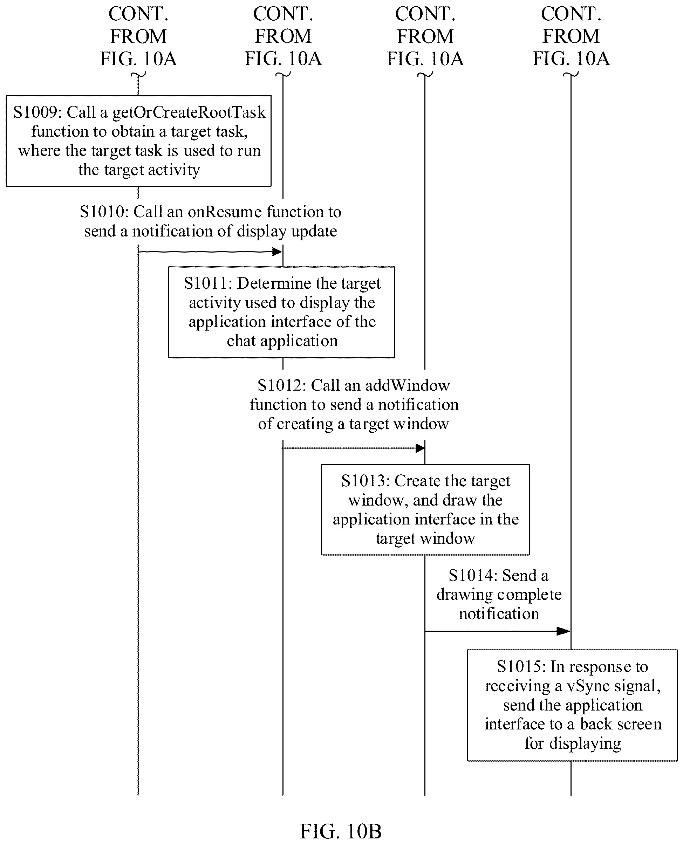

As shown in FIG. 10A and FIG. 10B, in a case that the electronic device displays the two-dimensional code interface of the chat application on the back screen, starting the chat application, on the home screen, displayed on the main screen is further used as an example, to describe specific implementation of excluding abnormal reuse.

S1000: The chat application receives an event of starting the application interface.

The event of starting the application interface may be an event of tapping the application icon of the chat application, or an event of touching and holding the application icon of the chat application and then selecting the two-dimensional code option.

Before S1000, the home screen may receive a touch event. When the touch event is an event of starting the application interface of the chat application, the home screen may send the event of starting the application interface to the chat application. In this way, the chat application can receive the event of starting the application interface.

S1001: The chat application calls a startActivity function to send a message to the AMS to display the application interface.

S1002: The AMS creates a target activity record object corresponding to a target activity, where the target activity is used to display the application interface.

S1003: The AMS calls an onCreate function to send a notification of initializing the target activity to the chat application.

S1004: The chat application initializes the target activity.

S1005: The AMS calls a getReusableTask function to search for a reusable activity.

In the example scenario combined in FIG. 10A and FIG. 10B, the AMS may find an activity for displaying the two-dimensional code interface on the back screen. In other words, the reusable activity is the activity used to display the two-dimensional code interface on the back screen.

S1006: If the reusable activity is found, the AMS determines whether a first condition is satisfied.

In the example scenario combined in FIG. 10A and FIG. 10B, the AMS finds the reusable activity. In addition, the example scenario combined in FIG. 10A and FIG. 10B also satisfies the following conditions:
sourceRecord.getDisplayId() == Display. DEFAULT DISPLAY //The caller is the main screen (DEFAULT_DISPLAY) application; and
&& reusedActivity.getDisplayId() == DisplayEx.SUB_BUILTIN_DISPLAY //The reusable activity (reusedActivity) is displayed on the back screen (SUB_BUILTIN_DISPLAY).

Therefore, the AMS may determine that the first condition is satisfied.

S1007: If no reusable activity is found or the first condition is satisfied, the AMS returns a null value.

In the example scenario combined in FIG. 10A and FIG. 10B, the AMS may determine that the first condition is satisfied, and therefore returns a null value, for example, null.

S1008: If the first condition is not satisfied, the AMS returns an identifier of the task corresponding to the reusable activity.

It should be noted that in the example scenario combined in FIG. 10A and FIG. 10B, the AMS determines that the first condition is satisfied, and therefore does not execute the branch S1008.

S1009: The AMS calls a getOrCreateRootTask function to obtain the target task, where the target task is used to run the target activity.

In the example scenario combined in FIG. 10A and FIG. 10B, the return value is null, and the AMS creates a new target task. In this way, the AMS may obtain a task that is different from the reusable task. For example, an identifier of the target task is different from that of the reusable task.

S1010: The AMS calls an onResume function to send a notification of display update to the chat application.

S1011: The chat application determines the target activity used to display the application interface of the chat application.

For example, the application interface is a main interface of the chat application.

S1012: The chat application calls an addWindow function to send, to the WMS, a notification of creating a target window, where the target window is used to display the application interface.

S1013: The WMS creates the target window, and draws the application interface in the target window.

S1014: The WMS sends a drawing complete notification to the SurfaceFlinger.

S1015: In response to receiving a vSync signal, the SurfaceFlinger sends the main interface to the main screen for displaying.

For a part that is not described in detail in the embodiment shown in FIG. 10A and FIG. 10B, refer to the foregoing descriptions of the embodiment shown in FIG. 9A and FIG. 9B. It should be noted that the back screen service in the embodiment shown in FIG. 9A and FIG. 9B corresponds to the chat application in the embodiment shown in FIG. 10A and FIG. 10B.

In other words, when the two-dimensional code interface of the chat application is displayed on the back screen, and further, in a scenario in which the application interface (for example, the main interface or the two-dimensional code interface) of the chat application is displayed on the main screen, the electronic device may further determine that the first condition is satisfied after querying the activity for displaying the two-dimensional code interface on the back screen. Therefore, the electronic device creates the new target task to run the target activity instead of using the reusable task to run the target activity. In this way, when the two-dimensional code interface of the chat application is displayed on the back screen, further displaying the application interface of the chat application on the main screen does not affect displaying of the two-dimensional code interface on the back screen. For example, the two-dimensional code interface does not disappear.

According to this embodiment, in a scenario of starting the application from the main screen, the AMS may further exclude reuse in the abnormal case 1 and abnormal case 2 based on the query of the reusable activity, to ensure that no abnormality occurs in the reuse. In this way, the main screen displays the main interface without affecting displaying of the back screen. For example, the two-dimensional code interface on the back screen does not disappear.

The following further describes the effects of the embodiment shown in FIG. 9A and FIG. 9B and FIG. 10A and FIG. 10B in combination with actual use scenarios.

Scenario 1: In a case that the main screen displays a minimized chat application, respond to the operation of enabling the back screen two-dimensional code.

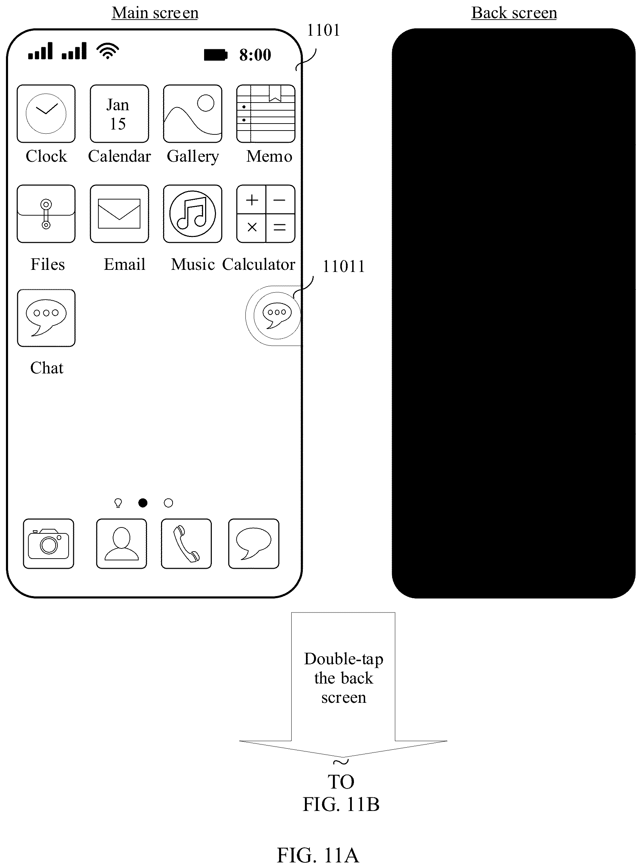

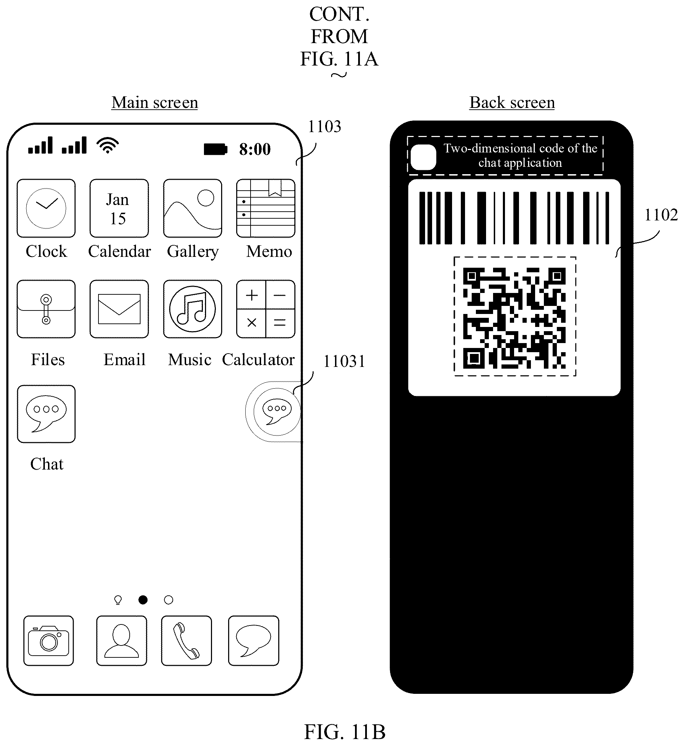

That the operation of enabling the two-dimensional code on the back screen is double-tapping the back screen is used as an example. The electronic device may display an interface 1101 shown in FIG. 11A and FIG. 11B on the main screen, the interface 1101 includes a capsule 11011, and the capsule 11011 includes the minimized chat application (for example, a floating icon). In this case, the back screen is black. In this case, after the user performs the operation of double-tapping the back screen, the electronic device may execute the procedure in FIG. 9A and FIG. 9B, finally display a two-dimensional code 1102 of the chat application shown in FIG. 11A and FIG. 11B on the back screen, and display an interface 1103 shown in FIG. 11A and FIG. 11B on the main screen, the interface 1103 includes a capsule 11031, and the capsule 11031 includes the minimized chat application. That is, the chat application on the main screen remains in the minimization form and is not expanded, for example, is not expanded into a form of a floating window. Therefore, the foregoing abnormal case 2 no longer occurs.

Specifically, after S900 to S904 are performed, the chat application completes initialization of the target activity. In performing S905, the AMS may find that the reusable activity is the activity of the minimized chat application displayed on the main screen. In performing S906, the AMS determines that the caller is the back screen service, and a form of a window of the reusable activity is a non-full screen form. Therefore, it may be determined that the first condition is satisfied. In performing S907, the AMS returns the null value. In performing S909, the AMS calls the getOrCreateRootTask function and creates the target task in the Create manner. That is, the back screen does not reuse the task corresponding to the activity of the minimized chat application, so that the activity of the minimized chat application on the main screen may not be affected. In performing S910 to S915, finally, the SurfaceFlinger sends the two-dimensional code interface to the back screen for displaying, and the back screen can display the two-dimensional code 1102 of the chat application shown in FIG. 11A and FIG. 11B.

Further, in S906, the AMS may obtain the package name of the caller as "SHORTCUT_QRCODE_PACKAGEANME", that is, the caller is the back screen service; and the AMS may obtain the form of the window of the activity of the minimized chat application displayed on the main screen as "!= WINDOWING_MODE_FULLSCREEN", that is, the form of the window of the reusable activity is a non-full screen form. Therefore, the AMS may determine that the first condition is satisfied.

Scenario 2: In a case that the main screen displays the application interface of the chat application in full screen, respond to the operation of enabling the two-dimensional code on the back screen.

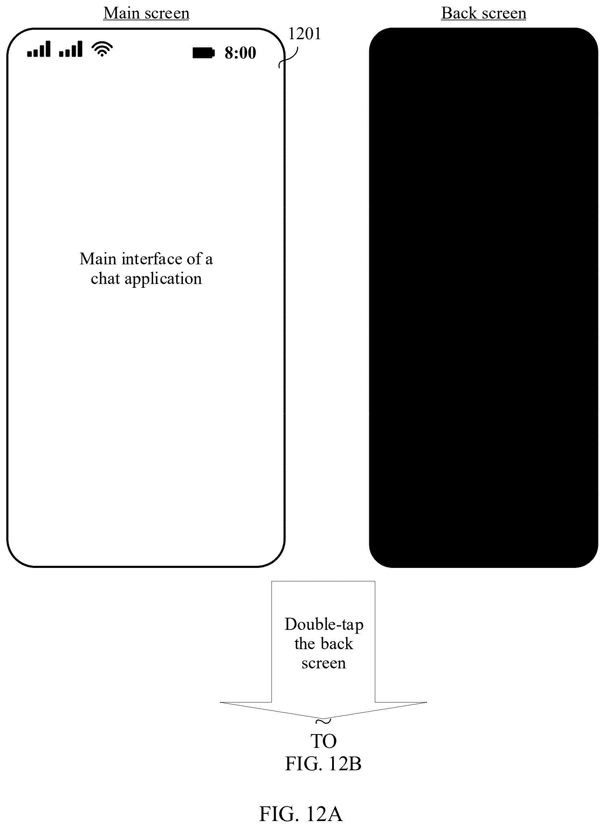

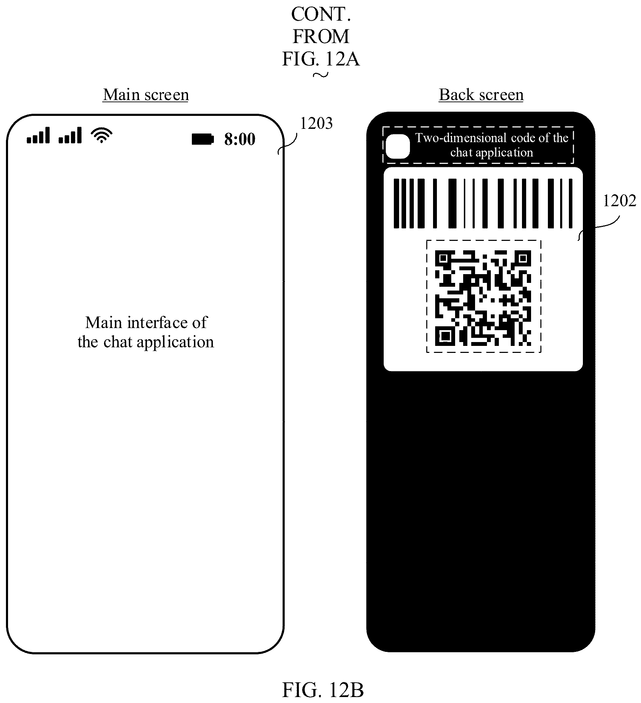

That the operation of enabling the two-dimensional code on the back screen is double-tapping the back screen is used as an example. The electronic device may display an interface 1201 shown in FIG. 12A and FIG. 12B on the main screen, and the interface 1201 includes the main interface of the chat application displayed in full screen. In this case, after the user performs the operation of double-tapping the back screen, the electronic device may execute the procedure in FIG. 9A and FIG. 9B, finally display a two-dimensional code 1202 of the chat application shown in FIG. 12A and FIG. 12B on the back screen, and display an interface 1203 shown in FIG. 12A and FIG. 12B on the main screen, and the interface 1203 still displays the main interface of the chat application in full screen. That is, the chat application on the main screen still remains in the full screen form.

Specifically, after S900 to S904 are performed, the chat application completes initialization of the target activity. In performing S905, the AMS may find that the reusable activity is the activity of the main interface displayed in full screen on the main screen. In performing S906, the AMS determines that the caller is the back screen service, but a form of a window of the reusable activity is a full screen form, not a non-full screen form. Therefore, it may be determined that the first condition is not satisfied. In performing S908, the AMS returns the identifier of the task corresponding to the activity used to display the main interface. In performing S909, the AMS calls the getOrCreateRootTask function and obtains the target task in the get manner. That is, the back screen reuses the task corresponding to the activity used to display the main interface. In performing S910 to S915, finally, the SurfaceFlinger sends the two-dimensional code interface jumped from the main interface to the back screen for displaying, and the back screen can display the two-dimensional code 1202 of the chat application shown in FIG. 12A and FIG. 12B.

Further, in S906, the AMS may obtain the package name of the caller as "SHORTCUT_QRCODE_PACKAGEANME", that is, the caller is the back screen service; and the AMS may obtain the form of the window of the activity of the full-screen main interface displayed on the main screen as "WINDOWING_MODE_FULLSCREEN", that is, the form of the window of the reusable activity is a non-full screen form. Therefore, the AMS may determine that the first condition is not satisfied.

Scenario 3: In a case that the two-dimensional code of the chat application is displayed on the back screen, respond to the operation of tapping the application icon on the main screen.

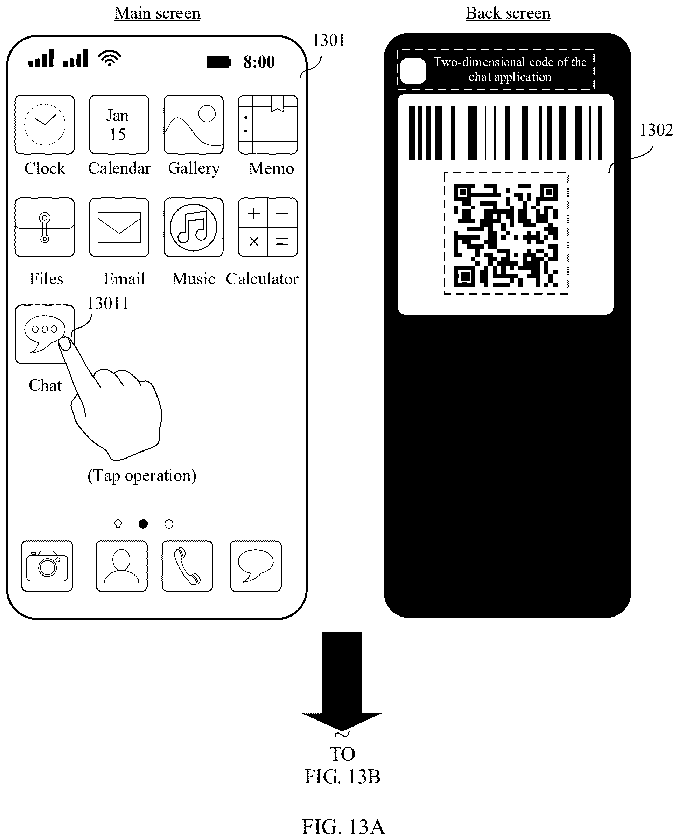

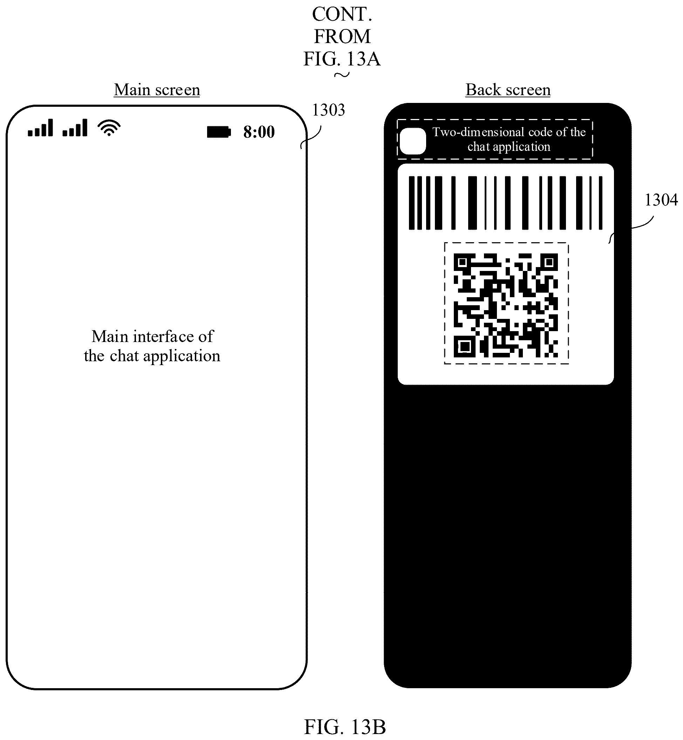

For example, the electronic device may display an interface 1301 shown in FIG. 13A and FIG. 13B on the main screen, the interface 1301 is the home screen of the electronic device, the interface 1301 includes an application icon 13011 of the chat application, and the electronic device may display a two-dimensional code 1302 of the chat application shown in FIG. 13A and FIG. 13B on the back screen. In this case, after the user taps the application icon 13011 in the interface 1301, the electronic device may execute the procedure in FIG. 10A and FIG. 10B, finally display a main interface 1303 of the chat application shown in FIG. 13A and FIG. 13B on the main screen, and display a two-dimensional code 1304 of the chat application shown in FIG. 13A and FIG. 13B on the back screen. That is, the two-dimensional code of the chat application on the back screen remains normally displayed and does not disappear. Therefore, the foregoing abnormal case 1 no longer occurs.

Specifically, after S1000 to S1004 are performed, the chat application completes initialization of the target activity. In performing S1005, the AMS may find that the reusable activity is the activity of the two-dimensional code displayed on the back screen. In performing S1006, the AMS determines that the caller is the chat application on the main screen, that is, the caller is a main screen application, and the reusable activity is displayed on the back screen. Therefore, it may be determined that the first condition is satisfied. In performing S1007, the AMS returns the null value. In performing S1009, the AMS calls the getOrCreateRootTask function and creates the target task in the Create manner. That is, the main screen does not reuse the task corresponding to the activity of the two-dimensional code on the back screen, so that the activity of the two-dimensional code on the back screen may not be affected. In performing S1010 to S1015, finally, the SurfaceFlinger sends the main interface of the chat application to the main screen for displaying, and the main screen may display the main interface 1303 of the chat application shown in FIG. 13A and FIG. 13B.

Further, in S1006, the AMS may obtain the screen on which the caller is located as DEFAULT_DISPLAY, that is, the caller is on the main screen and is a main screen application; and the AMS may obtain the screen on which the activity of the two-dimensional code displayed on the back screen is located as SUB_BUILTIN_DISPLAY, that is, the reusable activity is on the back screen. Therefore, the AMS may determine that the first condition is satisfied.

Scenario 4: In a case that the minimized chat application is displayed on the main screen, respond to the operation of touching and holding the application icon on the main screen and then selecting the two-dimensional code.

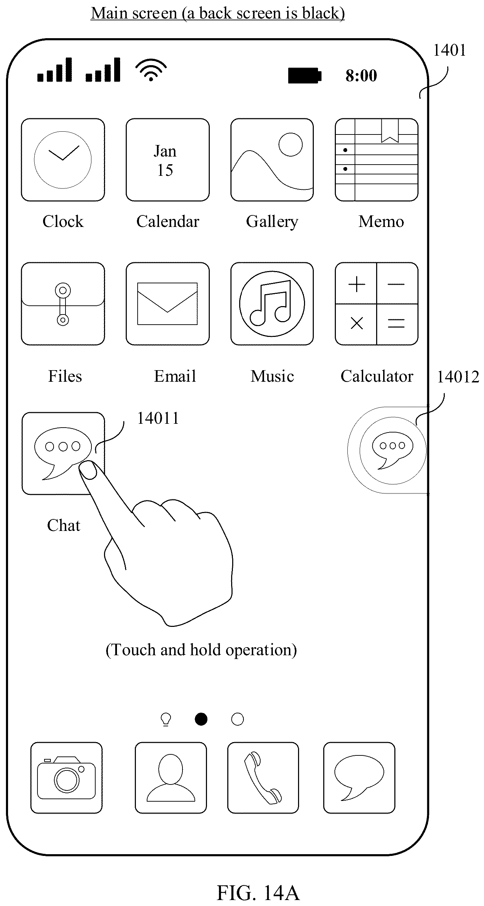

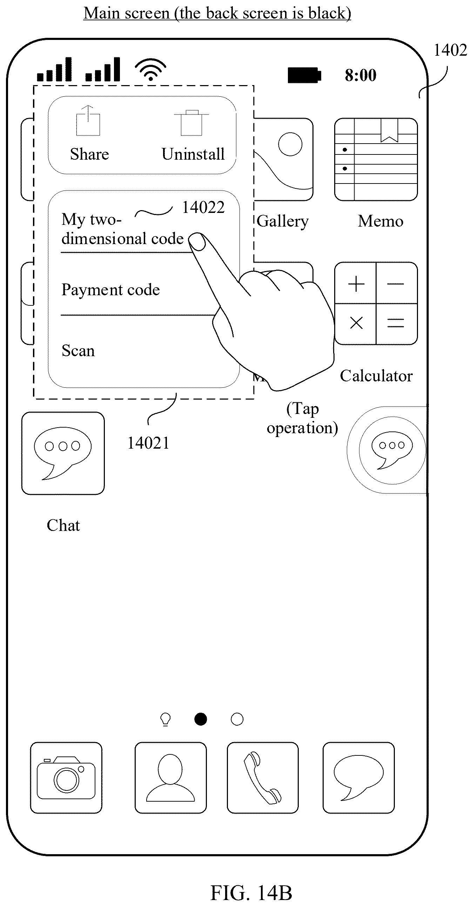

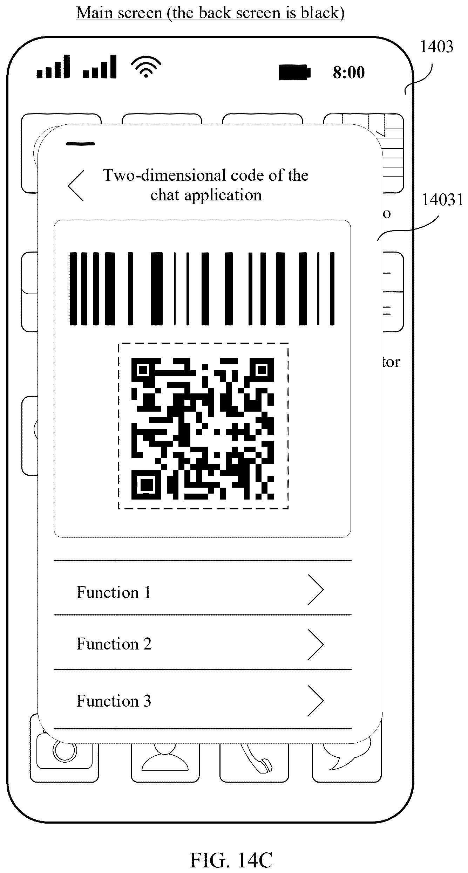

For example, the electronic device may display an interface 1401 shown in FIG. 14A to FIG. 14C on the main screen, the interface 1401 is the home screen of the electronic device, the interface 1401 includes an application icon 14011 and a floating icon 14012 of the chat application, and the back screen is in a black screen state. In response to the touching and holding operation of the user on the application icon 14011 in the interface 1401, the electronic device may display the interface 1402 shown in FIG. 14A to FIG. 14C on the main screen, the interface 1402 includes a dialog box 14021 (which may also be referred to as an option list, where the option list is circled by dashed lines in the figure, but the dashed lines are not displayed in practice), and the dialog box 14021 includes a two-dimensional code option (which may also be referred to as a first option), for example, "My two-dimensional code" 14022. In this case, after the user performs a selection operation (for example, a tap operation) on the two-dimensional code option, the electronic device may execute the procedure in FIG. 10A and FIG. 10B, and finally display an interface 1403 shown in FIG. 14A to FIG. 14C on the main screen, and the interface 1403 includes a two-dimensional code 14031 of the chat application displayed in a floating window, but does not include the minimized chat application, for example, does not include the floating icon 14012.

Specifically, after S1000 to S1004 are performed, the chat application completes initialization of the target activity. In performing S1005, the AMS may find that the reusable activity is the activity of the minimized chat application displayed on the main screen. In performing S1006, the AMS determines that the caller is the chat application on the main screen, that is, the caller is a main screen application, and the reusable activity is displayed on the main screen instead of on the back screen. Therefore, it may be determined that the first condition is not satisfied. In performing S1008, the AMS returns the identifier of the task corresponding to the activity used to display the minimized chat application. In performing S1009, the AMS calls the getOrCreateRootTask function and obtains the target task in the get manner. That is, the main screen reuses the task corresponding to the activity used to display the minimized chat application. In performing S1010 to S1015, finally, the SurfaceFlinger sends the two-dimensional code interface jumped from the minimized chat application to the main screen for displaying, and the main screen may display the two-dimensional code 14031 shown in FIG. 14A to FIG. 14C.

Further, in S1006, the AMS may obtain the screen on which the caller is located as DEFAULT_DISPLAY, that is, the caller is on the main screen and is a main screen application; and the AMS may obtain the screen on which the activity of the minimized chat application is displayed on the main screen as DEFAULT_DISPLAY, that is, the reusable activity is on the main screen. Therefore, the AMS may determine that the first condition is not satisfied.

In the examples of the foregoing scenario 1 and scenario 4, the minimized chat application is displayed on the home screen of the electronic device. In practice, the minimized chat application may alternatively be displayed in an interface of another application. A form of a floating icon is used as an example. The floating icon of the chat application may alternatively be floating-displayed in an application interface of an application such as Video, Music, Shopping, or Map.

In conclusion, according to the solutions of this application, when the outward foldable screen is in the folded state, the electronic device may further determine whether the first condition is satisfied after finding the reusable activity. If the first condition is satisfied, the electronic device does not reuse the reusable task for running the reusable activity, but creates a new target task for running the activity that needs to be displayed. This ensures that the information separately displayed on the main screen and the back screen is not abnormal due to task reuse.

An embodiment of this application further provides an electronic device. The electronic device includes, a display, a memory, and one or more processors (for example, a CPU, a GPU, and an NPU). The display, the memory, and the processor are coupled. The memory is configured to store computer program code. The computer program code includes computer instructions. When the processor executes the computer instructions, the electronic device may perform the functions or steps performed by the devices in the foregoing method embodiments.

An embodiment of this application further provides a chip system. The chip system includes at least one processor and at least one interface circuit. The processor and the interface circuit may be interconnected through a line. For example, the interface circuit may be configured to receive a signal from another apparatus (for example, a memory of an electronic device). For another example, the interface circuit may be configured to transmit a signal to another apparatus (for example, a processor). For example, the interface circuit may read instructions stored in the memory and send the instructions to the processor. When the instructions are executed by the processor, the electronic device may be enabled to perform the steps in the foregoing embodiments. Certainly, the chip system may further include another discrete component. This is not specifically limited in this embodiment of this application.

An embodiment further provides a computer storage medium. The computer storage medium stores computer instructions. When the computer instructions are run on an electronic device, the electronic device is enabled to perform the foregoing related methods and steps, to implement the image processing methods in the foregoing embodiments.

An embodiment further provides a computer program product. When the computer program product is run on a computer, the computer is enabled to perform the foregoing related steps, to implement the image processing method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs the image processing method in the foregoing method embodiments.

The electronic device, the computer storage medium, the computer program product, or the chip provided in the embodiments is configured to perform the corresponding method provided above. Therefore, for beneficial effects that can be achieved, refer to beneficial effects of the corresponding method provided above. Details are not described herein again.

A person skilled in the art may clearly learn from the foregoing descriptions of the implementations that, for convenience and brevity of description, division into the foregoing functional modules is only used as an example for description. During actual application, the foregoing functions may be allocated to different functional modules for implementation based on a requirement, that is, an inner structure of an apparatus is divided into different functional modules, to complete all or some of the functions described above.

In the several embodiments provided in this application, it should be understood that the disclosed apparatus and method may be implemented in other manners. For example, the described apparatus embodiments are merely examples. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, that is, may be located in one place, or may be distributed on different places. Some or all of the units may be selected based on actual requirements to achieve the objectives of the solutions in the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in the embodiments of this application. The foregoing storage medium includes any medium that can store program codes, for example, a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of this application, but not for limiting the technical solutions of this application. Although this application is described in detail with reference to the preferred embodiments, a person of ordinary skill in the art should understand that modifications or equivalent replacements may be made to the technical solutions of this application, without departing from the spirit and scope of the technical solutions of this application.

## Claims

1. A display method, applied to an electronic device, wherein the electronic device comprises a display, the display comprises a first screen and a second screen, a display direction of the first screen and a display direction of the second screen are opposite to each other when the display is in a folded state, and the first screen and the second screen are two different display areas of the display screen; the electronic device is in the folded state; and the method comprises:
displaying a home screen on the first screen at a first time point, wherein the home screen comprises a first icon and a second icon of a first application, and the first icon is displayed in a form of a floating icon;
displaying a first window on the home screen at a second time point based on a tap operation on the first icon, wherein the first window is a non-full-screen window, the home screen does not comprise the second icon, and the first window comprises a first interface of the first application at the second time point;
displaying the first icon on the home screen and not displaying the first window based on a minimization operation on the first window;
displaying the first window on the home screen at a third time point based on a first operation on the second icon, wherein the first window comprises a first two-dimensional code of the first application at the third time point;
displaying the first icon on the home screen and not displaying the first window at a fourth time point based on the minimization operation on the first window, wherein the second screen is black from the first time point to the fourth time point; and
displaying the first two-dimensional code on the second screen based on a second operation, wherein the home screen does not comprise the first window, and the home screen comprises the first icon.

2. The method according to claim 1, wherein the displaying the first window on the home screen at a third time point based on a first operation on the second icon comprises:
displaying an option list of the first application based on a touch and hold operation on the second icon, wherein the option list comprises a first option corresponding to the first two-dimensional code; and
displaying the first window on the home screen based on a selection operation on the first option at the third time point.

3. The method according to claim 1 or 2, wherein the second operation is an operation of double-tapping the second screen.

4. The method according to any one of claims 1 to 3, wherein the displaying the first window on the home screen at a third time point, wherein the first window comprises a first two-dimensional code of the first application at the third time point comprises:
displaying the first window on the home screen at the third time point based on a case that a category name of a first activity is the same as a category name of a second activity and a display associated with the first activity is the same as a display associated with the second activity, wherein the first window comprises the first two-dimensional code of the first application at the third time point; and
the first activity is an activity corresponding to the first icon, and the second activity is an activity corresponding to the first two-dimensional code displayed in the first window.

5. The method according to claim 4, wherein the displaying the first two-dimensional code on the second screen comprises:
displaying the first two-dimensional code on the second screen based on a case that the category name of the first activity is the same as a category name of a third activity but the display associated with the first activity is different from a display associated with the third activity, wherein
the third activity is an activity corresponding to the first two-dimensional code displayed on the second screen.

6. The method according to any one of claims 1 to 5, wherein after the displaying the first two-dimensional code on the second screen based on a second operation, the method further comprises:
not displaying the first icon on the home screen but displaying the first two-dimensional code on the second screen after a third operation; and
displaying a main interface of the first application on the first screen and displaying the first two-dimensional code on the second screen based on a tap operation on the second icon.

7. The method according to claim 6, wherein the displaying a main interface of the first application on the first screen comprises:
displaying the main interface of the first application on the first screen based on a case that the category name of the third activity is the same as a category name of a fourth activity but the display associated with the third activity is different from a display associated with the fourth activity, wherein
the third activity is the activity corresponding to the first two-dimensional code displayed on the second screen, and the fourth activity is an activity corresponding to the main interface displayed on the first screen.

8. The method according to any one of claims 1 to 5, wherein the displaying the first window on the home screen based on a first operation on the second icon comprises:
reusing, based on the first operation on the second icon and after determining that a caller is an application on the first screen and the first activity is associated with the first screen, a task of running the first activity to display the first window on the home screen, wherein
the first activity is the activity corresponding to the first icon.

9. The method according to claim 8, wherein the displaying the first two-dimensional code on the second screen based on a second operation comprises:
creating a new task and displaying the first two-dimensional code on the second screen based on the first operation and after determining that the caller is a first service and a form of a window of the first activity is a non-full-screen form.

10. The method according to claim 6 or 7, wherein the displaying a main interface of the first application on the first screen based on a tap operation on the second icon comprises:
creating a new task and displaying the main interface of the first application on the first screen based on the tap operation on the second icon and after determining that a caller is an application on the first screen and the fourth activity is associated with the second screen, wherein
the third activity is the activity corresponding to the first two-dimensional code displayed on the second screen.

11. An electronic device, comprising: a display, one or more processors, and one or more memories, wherein the one or more processors are coupled to the display and the one or more memories, the one or more memories are configured to store computer program code, and the computer program code comprises computer instructions; and when the one or more processors execute the computer instructions, the electronic device is enabled to perform the method according to any one of claims 1 to 10.

12. A computer-readable storage medium, comprising instructions, wherein when the instructions are run on an electronic device, the electronic device is enabled to perform the method according to any one of claims 1 to 10.
